# EUROPÄISCHE PATENTSCHRIFT

(11) **EP 2 421 925 B1**
(45) Veröffentlichungstag und Bekanntmachung des Hinweises auf die Patenterteilung: **18.04.2018**
(21) Anmeldenummer: 10720712.8
(22) Anmeldetag: 21.04.2010
(51) Int. Cl.: C09D 161/00

(54) **MEHRSCHICHT-BESCHICHTUNG, DEREN HERSTELLUNG UND VERWENDUNG ZUR VERKLEBUNG VON GLASSCHEIBEN**
MULTILAYER COATING, PRODUCTION AND USE THEREOF FOR THE ADHESION OF GLASS PANES
REVÊTEMENT MULTI-COUCHES, SA PRODUCTION ET SON UTILISATION POUR COLLER DES VITRES

(30) Priorität: 21.04.2009 DE 102009018249
(43) Veröffentlichungstag der Anmeldung: 29.02.2012
(73) Patentinhaber: BASF Coatings GmbH, 48165 Münster (DE)
(72) Erfinder: LÖW, Norbert, 91413 Neustadt/Aisch (DE); LAVALAYE, Jorn, 97082 Würzburg (DE); STEFFENS, Alexandra, 48161 Münster (DE)
(74) Vertreter: BASF IP Association
(86) Internationale Anmeldenummer: PCT/EP2010/002434
(87) Internationale Veröffentlichungsnummer: WO 2010/121794

(56) Entgegenhaltungen:
- US-A- 4 184 025
- US-A- 6 043 316
- US-A- 6 146 706
- US-A1- 2004 077 778
- US-A1- 2005 100 740
- US-A1- 2007 110 902
- US-B1- 6 203 913

## Beschreibung

### Gebiet der Erfindung

Die Erfindung betrifft eine Mehrschicht-Beschichtung, deren Herstellung und deren Verwendung zur Verklebung von Glasscheiben, insbesondere von Windschutzscheiben, insbesondere im Kraftfahrzeugbereich, sowie einen Basislack zur Herstellung der Mehrschichtlackierung.

### Stand der Technik

Mehrschichtlackierungen, bestehend aus Basislack und Klarlack, sind in der Automobilindustrie weit verbreitet. Sie werden wegen ihrer hervorragenden Eigenschaftsprofile, wie Kratz-, Chemikalien- und Wetterbeständigkeit, sowie hohem Glanz eingesetzt.

Die seit langem bekannten lösungsmittelhaltigen Beschichtungsstoffe, insbesondere die sogenannten Basislacke und Klarlacke, und die hiermit hergestellten ein- oder mehrschichtigen farb- und/oder effektgebenden Lackierungen weisen sehr gute anwendungstechnische Eigenschaften auf.

Die stetig wachsenden technischen und ästhetischen Ansprüche des Marktes, insbesondere die Ansprüche der Automobilhersteller und ihrer Kunden, erfordern aber eine stetige Weiterentwicklung des bisher erreichten technischen und ästhetischen Niveaus.

Insbesondere müssen neue Beschichtungsmittel zur Verfügung gestellt werden, die es gestatten, die Haftung von auf die Mehrschichtlackierung aufgebrachten Klebstoffen, beispielsweise zur Verklebung von Windschutzscheiben, zu der Mehrschichtlackierung zu verbessern. Dabei sollen aber die durch die bekannten Basis- und Klarlacke und die hieraus hergestellten Mehrschichtlackierungen erzielten Vorteile nicht verloren gehen, sondern zumindest in der gleichen, vorzugsweise einer stärkeren, Ausprägung erhalten bleiben.

Windschutzscheiben werden üblicherweise mit einem feuchtehärtenden Klebematerial auf Basis von Isocyanatgruppen-enthaltenden Polymeren an eine mit einer Mehrschichtlackierung beschichtete Karosse geklebt. Motor Vehicle Safety Standards (MVSS) erfordern, dass dieser Klebstoff eine komplette Adhäsion zur Windschutzscheibe und zu der Mehrschichtlackierung hat. Es ist dem Fachmann bekannt, dass Mehrschichtlackierungen auf Basis von Carbamat und Melamin eine deutliche Schwäche bezüglich der Scheibenverklebungs-Haftung zeigen. Deshalb wird in der Automobilindustrie größtenteils immer noch ein Primer auf die Mehrschichtlackierung appliziert, ehe der Klebstoff aufgetragen wird. Durch die Verwendung eines solchen zusätzlichen Primers zwischen Mehrschichtlackierung und Klebstoff entstehen erhebliche zusätzliche Kosten aufgrund des zusätzlichen Material- und Zeitbedarfs.

Der Klebstoff kann auch direkt auf die Mehrschichtlackierung aufgebracht werden, ohne dass ein Primer als Zwischenschicht zwischen Mehrschichtlackierung und Klebstoff eingesetzt wird (Primerless-Verfahren). Das Primerless-Verfahren wird heutzutage vermehrt im Automobilbereich eingesetzt, allerdings wird eine genaue Prozessüberwachung, wie beispielsweise eine äußerst genaue Kontrolle der Schichtdicken von Basislack und Klarlack, der Einbrennzeiten und -Temperaturen benötigt. Nur durch eine genaue Prozessüberwachung kann sichergestellt werden, dass die Klebstoffe an den Mehrschichtlackierungen ausreichend haften. Insbesondere in Fällen von zu hohen Basislack-Schichtdicken kombiniert mit niedrigen Klarlack-Schichtdicken kann es zur unerwünschten Enthaftung der Scheibenverklebungsmasse von der Mehrschichtlackierung kommen.

Eine Optimierung der Scheibenverklebungshaftung auf Mehrschichtlackierungen wird in der Regel durch Modifikationen im Klarlack erzielt. Beispiele hierfür findet man in folgenden Patentveröffentlichungen.

WO 2008/021712 A2 beschreibt die Verwendung eines Haftungsadditivs auf Basis von Borsäure bzw. eines Borsäurederivats und eines Esters. Der Einsatz dieser Additive in einem Carbamat-Melamin-Klarlack ergibt eine Verbesserung in der Scheibenverklebungshaftung.

US 2003/232222 A1 beschreibt ebenfalls die Verwendung eines Additivs auf Basis von Borsäure bzw. eines Borsäurederivats und eines Esters in einer oder beiden Schichten der Mehrschichtlackierung, um so die Zwischenschichthaftung bzw. die Scheibenverklebungshaftung zu verbessern.

WO 2007/008635 A1 beschreibt eine Mehrschichtlackierung, insbesondere einen Klarlack, der ein Additiv enthält, dessen funktionelle Gruppen nicht oder nur wenig mit den polymeren Bindemitteln oder dem Vernetzer reagieren. Dieses Additiv reichert sich im Grenzflächen-Bereich entlang der Oberfläche der Lackierung an und führt dazu, dass die Zwischenschicht-Haftung oder die Scheibenverklebungshaftung verbessert werden. Als geeignete Additive werden (Meth)Acrylatester- oder alpha-Olefin-basierte Polymere beschrieben. Der Zusatz des Additivs führt weiterhin zu Vorteilen hinsichtlich des Verlaufs und der Benetzung, wodurch ein Verzicht auf Netzmittel und Verlaufsadditive im Klarlack möglich ist. Zur Verbesserung der Scheibenverklebungshaftung wird das Additiv im Klarlack eingesetzt.

WO 2006/063304A1 beschreibt die Verwendung eines Additivs auf Basis eines Hydroxyl-funktionellen Epoxypolymers. Dieses Additiv reagiert nur begrenzt mit den funktionellen Gruppen im Klarlack und reichert sich im Grenzflächen-Bereich entlang der Oberfläche der Lackierung an, wodurch die Scheibenverklebungshaftung verbessert wird.

WO 2003/050194 A1 beschreibt einen Klarlack auf Basis eines Acrylat-Polymers mit Sekundär-Hydroxyl-Funktionalität und Carbamat- oder Harnstoff-Funktionalität und eines Vernetzers auf Melaminbasis. Um die Scheibenverklebungshaftung zu verbessern, speziell nach Schwitzwasserbelastung, enthält der Klarlack in der Mehrschichtlackierung einen zusätzlichen Bestandteil mit Carbamat- oder Harnstoff-Funktionalität. Dieser Bestandteil ist erhältlich aus der Reaktion
1) einer Verbindung mit einer primären Carbamat- oder einer primären Harnstoffgruppe sowie einer Hydroxylgruppe, mit
2) einer Verbindung, die mit den Hydroxylgruppen aus 1) reagieren kann, die aber nicht mit den Carbamatgruppen oder den Harnstoffgruppen aus 1) reagiert.

WO 2008/100548 A1 beschreibt einen Klarlack auf Basis eines Carbamatfunktionellen Polymers und eines Melaminharzes. Zur Optimierung der Scheibenverklebungshaftung wird sowohl im Klarlack als auch im Basislack ein Haftungsvermittler auf Basis Dibutylzinndiacetat und Butylphosphorsäure eingesetzt.

WO 2005/105938 A1 beschreibt einen Klarlack auf Basis eines OH-Polyesters und eines Polyisocyanat-Vernetzers. Niedermolekulare Silan-haltige Komponenten werden im Klarlack eingesetzt, um u.a. die Scheibenverklebungshaftung zu optimieren.

WO 2005/033233 A2 beschreibt einen Klarlack auf Basis eines Carbamatfunktionellen Polymers und eines Melarninharzes. Niedermolekulare Silan-haltige Komponenten werden im Klarlack eingesetzt, um u.a. die Scheibenverklebungshaftung zu optimieren.

Obwohl auch die Basislackschicht in der Mehrschichtlackierung einen Einfluss auf die Scheibenverklebungshaftung haben kann, gibt es nur wenige Veröffentlichungen, in denen eine Optimierung der Scheibenverklebungshaftung durch Modifikation des Basislacks angestrebt wird, wie im folgenden dargestellt wird.

WO 2005/046889 A1 beschreibt eine Mehrschichtlackierung, wobei der Klarlack Silan-Gruppen enthält. Die vorteilhafte Wirkung solcher Silankomponenten wird beim Einsatz der üblichen Alkyl- oder Aryl-Phosphorsäure-Katalysatoren im Basislack jedoch häufig stark beeinträchtigt. Es wird beschrieben, dass durch die ersatzweise Verwendung eines starken Säure-Katalysators im Basislack die Wirkung der Silankomponente weniger beeinträchtigt wird. Die Verwendung von Epoxy-Isocyanatblockierten Katalysatoren wird dabei bevorzugt, da sie im Gegensatz zu Amin-blockierten Katalysatoren eine bessere Appearance ergeben.

WO 2008/100548 A1 beschreibt einen Klarlack auf Basis eines Carbamatfunktionellen Polymers und eines Melaminharzes. Zur Optimierung der Scheibenverklebungshaftung wird sowohl im Klarlack als auch im Basislack ein Haftungsvermittler auf Basis Dibutylzinndiacetat und Butylphosphorsäure eingesetzt. In den Basislacken von Mehrschichtlackierungen werden üblicherweise Melaminharze als Vernetzer in hohen Anteilen eingesetzt. Melaminharze können dabei jedoch schichtübergreifend zu unerwünschten Wechselwirkungen mit den für die Scheibenverklebung eingesetzten Klebstoffen führen. Dies gilt insbesondere für die feuchtigkeitshärtenden, isocyanat-basierten Klebstoffe, die üblicherweise aufgrund ihres hervorragenden Eigenschaftsprofils für die Scheibenverklebung eingesetzt werden. Durch eine deutliche Verringerung des Melaminharzanteils im Basislack lässt sich diese Störwirkung reduzieren. Allerdings weisen derartige Formulierungen eine verschlechterte Appearance sowie einen deutlich reduzierten Festkörper auf.

Unerwünschte Wechselwirkungen mit den für die Scheibenverklebung eingesetzten Klebstoffen treten insbesondere verstärkt auf, wenn die Mehrschichtlackierung Stellen aufweist, an denen eine relativ dicke Basislackschicht von einer relativ dünnen Klarlackschicht abgedeckt wird. Aufgrund der Variationen im Herstellprozess lassen sich solche Stellen jedoch gerade im Bereich der Windschutzscheibe kaum vermeiden, denn bedingt durch den Aufbau der Lackieranlage und das Automobildesign kann die Schichtdicke gerade im Bereich der Windschutzscheibe nur sehr schwer genau eingestellt werden.

Es bestand somit der Bedarf, eine Mehrschichtlackierung zu entwickeln, die auch bei hoher Basislackschicht und/oder niedriger Klarlackschicht und ohne Vorhandensein eines zusätzlichen Haftprimers eine deutliche Verbesserung bezüglich der Scheibenverklebungshaftung zeigt, und die dabei weiterhin unverändert gute Verarbeitungs-, Applikations- und insbesondere technologische Eigenschaften aufweist.

### Aufgabe

Der vorliegenden Erfindung lag daher die Aufgabe zugrunde, eine Mehrschicht-Beschichtung, bestehend aus einer Klebstoffschicht und einer Mehrschichtlackierung mit mindestens einem Melaminharz-haltigen Basislack und mindestens einem Klarlack, bereitzustellen, die ohne Verwendung eines zusätzlichen Haftprimers eine verbesserte Scheibenverklebungshaftung zeigt. Es soll insbesondere auch die Scheibenverklebungshaftung nach Schwitzwasserbelastung verbessert werden. Insbesondere soll die Mehrschicht-Beschichtung auch bei hoher Basislackschichtdicke und/oder geringer Klarlackschichtdicke eine gute Scheibenverklebungshaftung aufweisen, ohne dass ein zusätzlicher Haftprimer erforderlich ist.

Eine weitere Aufgabe der Erfindung war es, einen Melaminharz-haltigen Basislack zur Verfügung zu stellen, der zur Herstellung einer solchen Mehrschicht-Beschichtung geeignet ist.

Mit der bereitzustellenden Mehrschicht-Beschichtung sollen aber die durch die bekannten Basis- und Klarlacke und die hieraus hergestellten Basislackierungen, Klarlackierungen und Mehrschichtlackierungen erzielten Vorteile nicht verloren gehen, sondern zumindest in der gleichen, vorzugsweise einer stärkeren, Ausprägung erhalten bleiben.

Die entsprechenden Mehrschichtlackierungen sollen daher insbesondere keinen oder einen nur sehr geringen Glanzschleier, einen guten Verlauf sowie einen sehr guten optischen Gesamteindruck (Appearance) aufweisen. Ferner sollen die Lackierungen frei von Lackstörungen, wie Rissbildungen (Mudcracking), Hell-Dunkel-Schattierungen (Wolken) und Stippen, sein. Darüber hinaus sollen die Lackierungen keine optischen Fehlstellen, wie z.B. Schleifflecken, zeigen und eine gute Zwischenschichthaftung aufweisen. Außerdem sollen die Beschichtungsmittel eine gute Lagerstabilität aufweisen, d.h. dass auch nach einer Lagerung der Beschichtungsmittel bei 60°C über 3 Tage keine signifikante Verschlechterung der Eigenschaften sowohl der Beschichtungsmittel als auch der aus diesen gelagerten Beschichtungsmitteln hergestellten Beschichtungen auftritt. So soll keine Verschlechterung der rheologischen Eigenschaften der Beschichtungsmittel, insbesondere kein Viskositätsanstieg, und keine Stippenbildung und keine Verschlechterung des Farbtons und Verlaufs auftreten.

### Lösung

Überraschenderweise wurde gefunden, dass die Aufgabe durch eine Mehrschicht-Beschichtung aus
(A) einer Mehrschicht-Lackierung, umfassend
   (A1) mindestens eine Basislackierung aus einem Basislack enthaltend mindestens ein Melaminharz, und
   (A2) mindestens eine Klarlackierung als oberste Schicht der Mehrschicht-Lackierung, und
(B) einer Klebstoffschicht aus einem feuchtigkeitshärtenden, isocyanat-basierten Klebstoff unmittelbar auf der obersten Klarlackschicht der Mehrschicht-Lackierung, wobei
   (i) alle im Basislack enthaltenen Aminoplastharze vollständig methylolierte, vollständig veretherte Melaminharze, bei denen mindestens 90% der veretherten Methylolgruppen mit Butanol verethert sind, sind und
   (ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält,
      gelöst werden kann.

Ein weiterer Gegenstand der Erfindung ist ein Melaminharz-haltiger Basislack zur Herstellung einer Mehrschicht-Beschichtung, dadurch gekennzeichnet, dass
(i) alle im Basislack enthaltenen Aminoplastharze vollständig methylolierte, vollständig veretherte Melaminharze, bei denen mindestens 90% der veretherten Methylolgruppen mit Butanol verethert sind, sind und
(ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

Des weiteren wurde die Verwendung einer Mehrschicht-Beschichtung zur Verklebung von Glasscheiben auf einem mit der Mehrschicht-Beschichtung beschichteten Substrat gefunden, die folgende Schritte umfasst:
(a) Beschichten des Substrats mit einer Mehrschicht-Lackierung, umfassend
   (A1) mindestens eine Basislackierung aus einem Basislack enthaltend mindestens ein Melaminharz, und
   (A2) mindestens eine Klarlackierung als oberste Schicht der Mehrschicht-Lackierung,
(b) Aushärten der Mehrschicht-Lackierung,
(c) Aufbringen einer Klebstoffschicht aus einem feuchtigkeitshärtenden, isocyanat-basierten Klebstoff unmittelbar auf die oberste Klarlackschicht der Mehrschicht-Lackierung, und
(d) Aufbringen einer Glasscheibe auf die Klebstoffschicht und Aushärtung des Klebstoffs, wobei
entweder (i) alle im Basislack enthaltenen Aminoplastharze vollständig methylolierte, vollständig veretherte Melaminharze, bei denen mindestens 90% der veretherten Methylolgruppen mit Butanol verethert sind, sind,
oder (ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält,
oder (iii) alle im Basislack enthaltenen Aminoplastharze vollständig methylolierte, vollständig veretherte Melaminharze, bei denen mindestens 90% der veretherten Methylolgruppen mit Butanol verethert sind, sind und der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

Die erfindungsgemäße Mehrschicht-Beschichtung besteht aus einer Klebstoffschicht und einer Mehrschichtlackierung. Die Mehrschichtlackierung umfasst mindestens eine Basislackierung aus einem Melaminharz-haltigen Basislack und mindestens eine Klarlackierung. Die Klebstoffschicht wird unmittelbar, d.h. ohne eine zusätzliche Zwischenschicht aus Haftprimer, auf die oberste Klarlackierung der Mehrschichtlackierung aufgebracht.

Durch die erfindungsgemäße Mehrschicht-Beschichtung wird eine verbesserte Scheibenverklebungshaftung erzielt. Insbesondere wird auch die Scheibenverklebungshaftung nach Schwitzwasserbelastung verbessert.

Besonders überraschend war es, dass durch die erfindungsgemäße Mehrschicht-Beschichtung auch bei hoher Basislackschichtdicke und/oder geringer Klarlackschichtdicke eine gute Scheibenverklebungshaftung erzielt wird. Dies gilt insbesondere auch dann, wenn kein zusätzlicher Haftprimer als Zwischenschicht zwischen Klarlackschicht und Klebstoff vorhanden ist.

Mit der erfindungsgemäßen Mehrschicht-Beschichtung gehen die durch die bekannten Basis- und Klarlacke und die hieraus hergestellten Basislackierungen, Klarlackierungen und Mehrschichtlackierungen erzielten Vorteile nicht verloren. Die Mehrschichtlackierungen der erfindungsgemäßen Mehrschicht-Beschichtung weisen insbesondere keinen oder einen nur sehr geringen Glanzschleier, einen guten Verlauf sowie einen sehr guten optischen Gesamteindruck (Appearance) auf. Ferner sind die Lackierungen frei von Lackstörungen, wie Rissbildungen (Mudcracking), Hell-Dunkel-Schattierungen (Wolken) und Stippen. Darüber hinaus zeigen die Lackierungen keine optischen Fehlstellen, wie z.B. Schleifflecken, und weisen eine gute Zwischenschichthaftung auf. Außerdem zeigen die Beschichtungsmittel eine gute Lagerstabilität, d.h. dass auch nach einer Lagerung der Beschichtungsmittel bei 60°C über 3 Tage keine signifikante Verschlechterung der Eigenschaften sowohl der Beschichtungsmittel als auch der aus diesen gelagerten Beschichtungsmitteln hergestellten Beschichtungen auftritt. So tritt keine Verschlechterung der rheologischen Eigenschaften der Beschichtungsmittel, insbesondere kein Viskositätsanstieg, und keine Stippenbildung und keine Verschlechterung des Farbtons und Verlaufs auf.

Schließlich erfüllen die erfindungsgemäßen Mehrschicht-Beschichtungen und die in den erfindungsgemäßen Mehrschicht-Beschichtungen verwendeten Mehrschicht-Lackierungen die üblicherweise an eine Automobillackierung gestellten Anforderungen.

### Ausführliche Beschreibung der Erfindung

Die Gegenstände der vorliegenden Erfindung ergeben sich aus den unabhängigen Ansprüchen. Bevorzugte Ausführungsformen der vorliegenden Erfindung werden in den abhängigen Ansprüchen beschrieben.

Ein Gegenstand der Erfindung ist eine Mehrschicht-Beschichtung, umfassend
(A) eine Mehrschicht-Lackierung, umfassend
   (A1) mindestens eine Basislackierung aus einem Basislack enthaltend mindestens ein Melaminharz, und
   (A2) mindestens eine Klarlackierung als oberste Schicht der Mehrschicht-Lackierung, und
(B) eine Klebstoffschicht aus einem feuchtigkeitshärtenden, isocyanat-basierten Klebstoff unmittelbar auf der obersten Klarlackschicht der Mehrschicht-Lackierung, wobei
   (i) alle im Basislack enthaltenen Aminoplastharze vollständig methylolierte, vollständig veretherte Melaminharze, bei denen mindestens 90% der veretherten Methylolgruppen mit Butanol verethert sind, sind und
   (ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

Unter einer Mehrschicht-Beschichtung wird eine Beschichtung verstanden, die mindestens eine Mehrschicht-Lackierung und eine Klebstoffschicht umfasst. Bevorzugt umfasst die erfindungsgemäße Mehrschicht-Beschichtung genau eine Mehrschicht-Lackierung (A) und genau eine Klebstoffschicht (B).

Unter einer Mehrschicht-Lackierung wird eine Lackierung verstanden, die mindestens eine Basislackierung und mindestens eine Klarlackierung umfasst. Die Mehrschicht-Lackierung (A) der erfindungsgemäßen Mehrschicht-Beschichtung umfasst bevorzugt eine oder zwei Basislackierungen und genau eine Klarlackierung, besonders bevorzugt genau eine Basislackierung (A1) und genau eine Klarlackierung (A2). Die Klarlackierung (A2) befindet sich ohne weitere Zwischenschicht unmittelbar auf der Basislackierung (A1).

Unter einer Basislackierung wird eine Lackierung verstanden, die aus einem Basislack, d.h. aus einem pigmentierten Beschichtungsmittel, welches auf ein Substrat aufgebracht wird, erhalten wurde.

Unter einer Klarlackierung wird eine Lackierung verstanden, die aus einem Klarlack, d.h. aus einem transparenten Beschichtungsmittel, welches auf ein Substrat aufgebracht wird, erhalten wurde.

### Basislack

### Melaminharze

Melaminharze sind Polykondensationsharze aus Melamin (1,3,5-Triazin-2,4,6-triamin) und maximal 6 Mol Formaldehyd pro Mol Melamin. Die resultierenden Methylolgruppen können ganz oder teilweise mit einem oder verschiedenen Alkoholen verethert sein. Melaminharze können unterschiedliche Methylolierungsgrade und unterschiedliche Veretherungsgrade aufweisen.

Der Methylolierungsgrad eines Melaminharzes beschreibt, wie viele der möglichen Methylolierungsstellen des Melamins methyloliert sind, d.h. wie viele der insgesamt sechs Wasserstoffatome der primären Aminogruppen des Melamins (d.h. des 1,3,5-Triazin-2,4,6-triamins) durch eine Methylolgruppe ersetzt sind. Ein vollständig methyloliertes, einkerniges Melaminharz weist demzufolge sechs Methylolgruppen pro Triazinring auf, wie beispielsweise Hexamethylolmelamin. Die Methylolgruppen können unabhängig voneinander auch verethert vorliegen.

Unter dem Veretherungsgrad eines Melaminharzes wird der Anteil an Methylolgruppen des Melaminharzes verstanden, der mit einem Alkohol verethert wurde. Bei einem vollständig veretherten Melaminharz sind alle vorhandenen Methylolgruppen nicht frei, sondern mit einem Alkohol verethert. Zur Veretherung sind ein- oder mehrwertige Alkohole geeignet. Bevorzugt werden einwertige Alkohole zur Veretherung eingesetzt. Beispielsweise können Methanol, Ethanol, n-Butanol, i-Butanol oder auch Hexanol zur Veretherung eingesetzt werden. Es können auch Gemische verschiedener Alkohole eingesetzt werden, beispielsweise ein Gemisch aus Methanol und n-Butanol.

Melaminharze können monomer (einkernig) oder oligomer (mehrkernig) vorliegen. Die Angabe "einkernig" bzw. "mehrkernig" bezieht sich auf die Anzahl der Triazinringe pro Molekül Melaminharz. Ein Beispiel für ein einkerniges, vollständig methyloliertes und vollständig mit Butanol verethertes Melaminharz ist Hexamethoxybutylmelamin.

Der Basislack der erfindungsgemäßen Mehrschicht-Beschichtung enthält als Aminoplastharze ausschließlich vollständig methylolierte, vollständig veretherte Melaminharze, bei denen mindestens 90% der veretherten Methylolgruppen mit Butanol verethert sind. Diese Melaminharze werden im Rahmen der vorliegenden Erfindung auch als "überwiegend butylierte Melaminharze" bezeichnet. Unter überwiegend butylierten Melaminharzen werden also Melaminharze verstanden, die vollständig methyloliert sind (d.h. in der einkernigen Form sechs Methylolgruppen pro Triazinring aufweisen), die des weiteren vollständig verethert sind (d.h. alle Methylolgruppen sind mit einem Alkohol verethert), und bei denen außerdem im Mittel mindestens 90%, vorzugsweise mindestens 95%, besonders bevorzugt mindestens 99% der veretherten Methylolgruppen mit Butanol (n-Butanol oder i-Butanol) verethert sind.

Ein bevorzugtes Beispiel für ein überwiegend butyliertes Melaminharz ist Hexamethoxybutylmelamin (Cymel® 1156 der Firma Cytec Specialities).

In die Gruppe der überwiegend butylierten Melaminharze fallen insbesondere weder Melaminharze, die nicht vollständig methyloliert sind, noch Melaminharze, die nicht vollständig verethert sind, noch Melaminharze, bei denen der Anteil der mit Butanol veretherten Methylolgruppen weniger als 90% beträgt.

Der Basislack enthält vorzugsweise 8 bis 15 Gew.-% Melaminharz, bezogen auf das Gesamtgewicht des Basislacks.

Es ist erfindungswesentlich, dass alle im Basislack enthaltenen Aminoplastharze aus der Gruppe der überwiegend butylierten Melaminharze, d.h. der Gruppe der vollständig methylolierten, vollständig veretherten Melaminharze, bei denen mindestens 90% der veretherten Methylolgruppen mit Butanol verethert sind, ausgewählt sind. Der Basislack enthält somit neben dem oder den überwiegend butylierten Melaminharzen keine weiteren Aminoplastharze. Der Basislack kann jedoch gegebenenfalls weitere, von Aminoplastharzen verschiedene Vernetzer enthalten, wie beispielsweise blockierte Isocyanate. Unter Aminoplastharzen werden Melaminharze, Harnstoffharze und Benzoguanaminharze verstanden.

### Polyester-Bindemittel (PE)

Der Basislack enthält bevorzugt mindestens 1,0 Gew.-%, bezogen auf das Gesamtgewicht des Basislacks, mindestens eines Polyester-Bindemittels (PE), das eine Hydroxylzahl von mindestens 240 mg KOH/g und eine Säurezahl von höchstens 10 mg KOH/g aufweist.

Unter Polyester-Bindemitteln (PE) werden Polyesterharze und Polyester-Polyurethane verstanden.

Die Hydroxylzahl wird nach DIN 53240 bestimmt und bezieht sich auf den Festkörper des Polyester-Bindemittels. Vorzugsweise liegt die Hydroxylzahl des mindestens einen Polyester-Bindemittels (PE) bei mindestens 270 mg KOH/g.

Die Säurezahl wird nach DIN 53402 bestimmt und bezieht sich auf den Festkörper des Polyester-Bindemittels. Vorzugsweise liegt die Säurezahl des mindestens einen Polyester-Bindemittels (PE) bei höchstens 5 mg KOH/g.

Bevorzugt weist das mindestens eine Polyester-Bindemittel eine Hydroxylzahl von 270 mg KOH/g bis 300 mg KOH/g und eine Säurezahl von höchstens 10 mg KOH/g auf.

Bevorzugt enthält der Basislack mindestens 1,0 Gew.-%, besonders bevorzugt 1 bis 6 Gew.-%, jeweils bezogen auf das Gesamtgewicht des Basislacks, mindestens eines Polyester-Bindemittels (PE), das eine Hydroxylzahl von mindestens 240 mg KOH/g und eine Säurezahl von höchstens 10 mg KOH/g aufweist. Bei einem Gehalt des Basislacks von mehr als 6 Gew.-%, bezogen auf das Gesamtgewicht des Basislacks, des mindestens einen Polyester-Bindemittels (PE) mit einer Hydroxylzahl von mindestens 240 mg KOH/g und mit einer Säurezahl von höchstens 10 mg KOH/g können Stabilitätsprobleme auftreten.

Geeignete Polyester-Bindemittel (PE) können gesättigt oder ungesättigt, insbesondere gesättigt sein. Unter ungesättigten Polyester-Bindemitteln (PE) werden solche verstanden, die mindestens eine polymerisierbare Kohlenstoff-Kohlenstoff-Doppelbindung enthalten. Unter gesättigten Polyester-Bindemitteln (PE) werden solche verstanden, die keine polymerisierbare Kohlenstoff-Kohlenstoff-Doppelbindung enthalten.

Vorzugsweise weist das mindestens eine Polyester-Bindemittel (PE) ein gewichtsmittleres Molekulargewicht von 400 bis 2500 g/mol auf. Die Bestimmung des Molekulargewichts erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt. Bei der Verwendung von Polyester-Bindemitteln (PE) mit einem höheren Molekulargewicht wird der Festkörper des Lackes negativ beeinflusst.

Bevorzugt werden als Polyester-Bindemittel (PE) Polyesterharze eingesetzt. Polyesterharze können durch Veresterung von organischen Dicarbonsäuren oder ihren Anhydriden mit organischen Diolen hergestellt werden oder können sich von einer Hydroxycarbonsäure oder einem Lacton ableiten. Besonders bevorzugt werden die Polyesterharze durch Veresterung von organischen Dicarbonsäuren oder ihren Anhydriden mit organischen Diolen hergestellt. Die besonders bevorzugten Polyesterharze enthalten daher Struktureinheiten, die auf aliphatische, cycloaliphatische und/oder aromatische Di- bzw. Polycarbonsäuren und auf Di- bzw. Polyole zurückgehen. Um verzweigte Polyesterharze herzustellen, können in geringem Umfang auch Polyole oder Polycarbonsäuren mit einer höheren Wertigkeit als 2 eingesetzt werden. Die Di- bzw. Polycarbonsäuren und Di- bzw. Polyole können lineare oder verzweigte aliphatische, cycloaliphatische oder aromatische Di- bzw. Polycarbonsäuren oder Di- bzw. Polyole sein.

Zur Herstellung der Polyesterharze geeignete Diole sind beispielsweise Alkylenglykole, wie Ethylenglykol, Propylenglykol, Butylenglykol, Butandiol-1,4, Hexandiol-1,6, Neopentylglykol, und andere Diole, wie Dimethylolcyclohexan. Es können jedoch auch kleine Mengen an Polyolen, wie beispielsweise Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren, verwendet werden.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 12 und der Substituent R² = jeweils unabhängig voneinander Wasserstoff, ein Alkyl-, Cycloalkyl- oder AlkoxyRest. Bevorzugt enthält keiner der Substituenten R² mehr als 12 Kohlenstoffatome Beispiele sind Hydroxycapronsäure, Hydroxybuttersäure, Hydroxydecansäure und/oder 12-Hydroxystearinsäure.

Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ε-Caprolactam mit niedermolekularen Diolen hergestellt werden.

### Weitere Bindemittel

Der Basislack kann neben dem Polyester-Bindemittel (PE) mit einer Hydroxylzahl von mindestens 240 mg KOH/g und einer Säurezahl von höchstens 10 mg KOH/g noch weitere Bindemittel enthalten. Bevorzugt enthält der Basislack mindestens ein weiteres Bindemittel.

Als weitere Bindemittel sind beispielsweise statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze geeignet. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind von den Polyester-Bindemitteln (PE) mit einer Hydroxylzahl von mindestens 240 mg KOH/g und einer Säurezahl von höchstens 10 mg KOH/g verschiedene Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere von den Polyester-Bindemitteln (PE) mit einer Hydroxylzahl von mindestens 240 mg KOH/g und einer Säurezahl von höchstens 10 mg KOH/g verschiedene Polyester.

Von diesen Bindemitteln weisen die (Meth)Acrylat(co)polymerisate besondere Vorteile auf und werden deshalb besonders bevorzugt verwendet.

Die Schreibweise (Meth)Acrylat umfasst sowohl Acrylate, Methacrylate als auch Mischungen hiervon. Die Schreibweise (Co)polymerisat umfasst Homopolymerisate und Copolymerisate. Der Begriff (Meth)Acrylat(co)polymerisate umfasst daher Homo- und Copolymerisate von Acrylsäure und Acrylsäure-Derivaten, Methacrylsäure und Methacrylsäure-Derivaten sowie gegebenenfalls zusätzlicher, von (Meth)Acrylsäure und -derivaten verschiedenen ethylenisch ungesättigten Comonomeren.

Unter Acrylat-Bindemitteln (AC) werden daher (Meth)Acrylat(co)polymerisate und aus (Meth)Acrylat(co)polymerisaten durch polymeranaloge Reaktionen erhaltene Derivate verstanden. Polymeranaloge Reaktionen sind Reaktionen an Makromolekülen, die unter Erhalt des Polymercharakters der Substrate durchgeführt werden. Sie bewirken also die Umwandlung eines Polymeren in ein anderes. Polymeranaloge Reaktionen werden im allgemeinen über funktionelle Gruppen der Makromoleküle durchgeführt. Zu dem Begriff "polymeranaloge Reaktion" wird ergänzend auf Römpp Chemie Lexikon, 9. Auflage 1995, Band PL - S, Seite 3542-3543, Stichwort "Polymeranaloge Reaktionen" verwiesen.

Der Basislack enthält bevorzugt 10 bis 30 Gew.-%, besonders bevorzugt 12 bis 20 Gew.-%, jeweils bezogen auf das Gesamtgewicht des Basislacks, mindestens eines Acrylat-Bindemittels (AC).

Als Acrylat-Bindemittel (AC) geeignet sind die in Basislacken im Bereich der Automobilindustrie üblicherweise eingesetzten Acrylat-Bindemittel, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für den Basislack gesteuert wird.

Als Acrylat-Bindemittel (AC) geeignet sind beispielsweise statistisch, alternierend und/oder blockartig aufgebaute lineare und/oder verzweigte und/oder kammartig aufgebaute (Co)Polymerisate von Acrylsäure und/oder Methacrylsäure sowie gegebenenfalls zusätzlichen ethylenisch ungesättigten Monomeren sowie aus diesen (Co)Polymerisaten durch polymeranaloge Reaktionen erhaltene Verbindungen.

Es werden vorzugsweise Acrylat-Bindemittel (AC) mit Thio-, Hydroxyl-, N-Methylolamino-, N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether, Siloxan-, Carbonat-, Amino-, Hydroxy- und/oder beta-Hydroxyalkylamidgruppen, bevorzugt Epoxy-, beta-Hydroxyalkylamid-, blockierte und unblockierte Isocyanat-, Urethan- oder Alkoxymethylaminogruppen, andererseits eingesetzt.

Im Falle selbstvernetzender Acrylat-Bindemittel (AC) enthalten die Bindemittel insbesondere Methylol-, Methylolether- und/oder N-Alkoxymethylaminogruppen.

Komplementäre reaktive funktionelle Gruppen, die für die Verwendung in den Beschichtungsstoffen besonders gut geeignet sind, sind Hydroxylgruppen einerseits und blockierte und unblockierte Isocyanat-, Urethan- oder Alkoxymethylaminogruppen andererseits.

Die Funktionalität der Acrylat-Bindemittel (AC) bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel (V). Beispielsweise liegt im Falle hydroxylgruppenhaltiger Acrylat-Bindemittel (AC) die OH-Zahl vorzugsweise bei 15 bis 300, bevorzugt 20 bis 250, besonders bevorzugt 25 bis 200, ganz besonders bevorzugt 30 bis 150 und insbesondere 35 bis 120 mg KOH/g nach DIN 53240.

Die vorstehend beschriebenen komplementären funktionellen Gruppen können nach den üblichen und bekannten Methoden der Polymerchemie in die Acrylat-Bindemittel (AC) eingebaut werden. Dies kann beispielsweise durch den Einbau von Monomeren, die entsprechende reaktive funktionelle Gruppen tragen, und/oder mit Hilfe polymeranaloger Reaktionen geschehen.

Geeignete Acrylat-Bindemittel (AC) weisen im Allgemeinen ein gewichtsmittleres Molekulargewicht von 400 bis 5000 g/mol auf. Die Bestimmung des Molekulargewichts erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt. Bei höheren Molekulargewichten kann die Löslichkeit des Acrylat-Bindemittels (AC) abnehmen, wodurch mehr Lösemittel benötigt wird und somit der Festkörpergehalt des Lacks sinkt. Bei geringeren Molekulargewichten können technologische Probleme auftreten.

Geeignete Acrylat-Bindemittel (AC) können nach den dem Fachmann bekannten Methoden unter Verwendung entsprechender olefinisch ungesättigter Monomere mit reaktiven funktionellen Gruppen, ggf. im Kombination mit Monomeren ohne reaktive funktionelle Gruppen, hergestellt werden.

Beispiele geeigneter olefinisch ungesättigter Monomere mit reaktiven funktionellen Gruppen sind:
a) Monomere, welche mindestens eine Hydroxyl-, Amino-, Alkoxymethylamino-, Carbamat-, Allophanat- oder Iminogruppe pro Molekül tragen, wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, - fumarat oder -itaconat; oder Hydroxycyclo-alkylester wie 1,4-Bis(hydroxymethyl)cyclohexan-, Octahydro-4,7-methano-1H-inden-dimethanol- oder Methylpropandiolmonoacrylat, -monomethacrylat,-monoethacrylat, -monocrotonat, -monomaleinat, -monofumarat oder-monoitaconat; Umsetzungsprodukte aus cyclischen Estern, wie z.B. ε-Caprolacton und diesen Hydroxyalkyl- oder -cycloalkylestern;
   - olefinisch ungesättigte Alkohole wie Allylalkohol;
   - Polyole wie Trimethylolpropan mono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide, wie (Meth)Acrylsäureamid, N-Methyl-, NMethylol-, N,N-Dimethylol-, N-Methoxymethyl-, N,N-Di(methoxymethyl)-, N-Ethoxymethyl- und/oder N,N-Di(ethoxyethyl)-(meth)-acrylsäureamid;
   - Acryloyloxy- oder Methacryloyloxyethyl-, propyl- oder butylcarbamat oder - allophanat; weitere Beispiele geeigneter Monomere, welche Carbamatgruppen enthalten, werden in den Patentveröffentlichungen U.S. Pat. No. 3.479.328, U.S. Pat. No. 3.674.838, U.S. Pat. No. 4.126.747, U.S. Pat. No. 4.279.833 oder U.S. Pat. No. 4.340.497 beschrieben.
b) Monomere, welche mindestens eine Säuregruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
c) Epoxidgruppen enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im Allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der (Meth)Acrylat(co)polymerisate führen.

Beispiele geeigneter olefinisch ungesättigter Monomere ohne reaktive funktionelle Gruppen sind u.a. Alkylester der Acrylsäure, Methacrylsäure oder einer anderen alpha,beta-olefinisch ungesättigten Carbonsäure, vinylaromatische Verbindungen sowie Mischungen dieser Monomeren.

Der Basislack kann physikalisch härtend sein. Im Rahmen der vorliegenden Erfindung bedeutet der Begriff "physikalische Härtung" die Härtung einer Schicht aus einem Beschichtungsmittel durch Verfilmung durch Lösemittelabgabe aus dem Beschichtungsmittel, wobei die Verknüpfung innerhalb der Beschichtung über Schlaufenbildung der Polymermoleküle der Bindemittel (zu dem Begriff vgl. Römpp Lexikon Lacke und Druckfarben, Seiten 73 und 74, Stichwort "Bindemittel") erfolgt. Oder aber die Verfilmung erfolgt über die Koaleszenz von Bindemittelteilchen (vgl. Römpp Lexikon Lacke und Druckfarben, Seiten 274 und 275, Stichwort "Härtung"). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Der Basislack kann thermisch härtbar sein. Hierbei kann das Bindemittel selbstvernetzend oder fremdvernetzend sein. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder aber das Bindemittel enthält reaktive funktionelle Gruppen, die "mit sich selbst" reagieren können. Als fremdvernetzend werden dagegen solche Beschichtungsmittel bezeichnet, worin die eine Art der komplementären reaktiven funktionellen Gruppen in dem Bindemittel, und die andere Art in einem Vernetzungsmittel vorliegen. Ergänzend wird hierzu auf Römpp Lexikon Lacke und Druckfarben, Georg Thieme Verlag, Stuttgart, New York, 1998, "Härtung", Seiten 274 bis 276, insbesondere Seite 275, unten, verwiesen.

### Pigmente

Der Basislack enthält als pigmentiertes Beschichtungsmittel mindestens ein Pigment (P).

Pigmente sind pulver- oder plättchenförmige Farbmittel, die im Gegensatz zu Farbstoffen im umgebenden Medium unlöslich sind (vgl. Römpp Lacke und Druckfarben, Seite 451, Stichwort "Pigmente")

Vorzugsweise wird das Pigment (P) aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Besonders bevorzugt enthält der Basislack mindestens ein effektgebendes Pigment, insbesondere mindestens ein Metallplättchenpigment. Zusammen mit dem oder den effektgebenden Pigmenten enthält der Basislack ggf. noch mindestens ein oder mehrere farbgebende Pigmente.

Beispiele geeigneter Effektpigmente, die auch farbgebend sein können, sind Metallplättchenpigmente, wie handelsübliche Aluminiumbronzen und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden handelsübliche Aluminiumbronzen eingesetzt. Eingesetzt werden dabei sowohl unbehandelte Typen, die beispielsweise unter dem Namen Stapa® Metallux der Firma Eckart im Handel erhältlich sind, als auch behandelte Typen, insbesondere silanisierte Typen, die beispielsweise in der WO 01/81483 beschrieben sind und beispielsweise unter dem Namen Hydrolan® der Firma Eckart im Handel erhältlich sind.

Vorzugsweise weist das Metallplättchenpigment eine Dicke von 200 bis 2000 nm und insbesondere 500 bis 1500 nm auf.

Bevorzugt hat das Metallplättchenpigment eine mittlere Teilchengröße von 10 bis 50 und insbesondere von 13 bis 25 µm (ISO 13320-1 nach Cilas (Gerät 1064)).

Geeignete organische und/oder anorganische farbgebende Pigmente sind die in der Lackindustrie üblicherweise eingesetzten Pigmente.

Beispiele für geeignete anorganische farbgebende Pigmente sind Weißpigmente wie Titandioxid, Zink-Weiß, Zinksulfid oder Lithopone; Schwarzpigmente wie Russ, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, Stichworte "Eisenblau-Pigmente" bis "Eisenoxidschwarz", Seiten 451 bis 453, Stichworte "Pigmente" bis "Pigmentvolumenkonzentration", Seite 563, Stichwort "Thioindigo-Pigmente", Seite 567, Stichwort "Titandioxid-Pigmente", Seiten 400 und 467, Stichwort "Natürlich vorkommende Pigmente", Seite 459, Stichwort "Polycyclische Pigmente", Seite 52, Stichworte "Azomethinpigmente", "Azopigmente", und Seite 379, Stichwort "Metallkomplex-Pigmente", verwiesen.

Der Gehalt an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in Basislacken. Vorzugsweise liegt der Pigmentgehalt im Falle von Uni-Basislacken, jeweils bezogen auf das Gesamtgewicht des Basislacks, bei 0,5 bis 60 Gew.-%, besonders bevorzugt bei 1 bis 50 Gew.-%. Unter Uni-Basislacken werden Basislacke verstanden, die keine Metallic- oder Effektpigmente enthalten. Vorzugsweise liegt der Pigmentgehalt im Falle von Metallic-Lacken, jeweils bezogen auf das Gesamtgewicht des Basislacks, bei 0,5 bis 40 Gew.-%, bevorzugt bei 0,5 bis 35 Gew.-%, besonders bevorzugt bei 1 bis 30 Gew.-%.

### Organische Lösemittel (L)

Der Basislack enthält üblicherweise 30 bis 70 Gew.-%, bezogen auf das Gesamtgewicht des Basislacks, mindestens eines organischen Lösemittels (L).

Vorzugsweise enthält der Basislack 38 bis 65 Gew.-%, besonders bevorzugt 40 bis 60 Gew.-%, jeweils bezogen auf das Gesamtgewicht des Basislacks, mindestens eines organischen Lösemittels (L).

Als organische Lösemittel (L) geeignet sind alle üblicherweise in der Lackindustrie eingesetzten Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellsol T, Pine Oel 90/95, Solventnaphtha®, Shellsol® A, Solvesso, Benzin 135/180 und ähnliche.

Durch den Gehalt an organischem Lösemittel (L) kann die Viskosität des Basislacks beeinflusst werden. Der Gehalt an organischem Lösemittel (L) wird vorzugsweise so gewählt, dass der Basislack bei 23°C eine Viskosität von 16 s bis 35 s, bevorzugt 18 bis 25 s, Auslaufzeit im Ford 3 Cup aufweist. In der vorliegenden Anmeldung wird eine solche Viskosität von 16 s bis 35 s, bevorzugt 18 bis 25 s, Auslaufzeit im Ford 3 Cup bei 23°C im Allgemeinen als "Spritzviskosität" bezeichnet.

Durch den Gehalt an organischem Lösemittel (L) wird auch der Festkörpergehalt des Basislacks beeinflusst. Der Gehalt an organischem Lösemittel (L) im Basislack wird vorzugsweise so gewählt, dass der Basislack einen Festkörpergehalt von mindestens 30 Gew.-% aufweist. Der Festkörpergehalt des Basislacks wird nach DIN ISO 3251 mit einer Einwaage von 1,0 g bei einer Prüfdauer von 60 min bei einer Temperatur von 125 °C durchgeführt.

Der Basislack ist wasserfrei. Unter einem wasserfreien Basislack wird ein Basislack verstanden, der völlig oder im wesentlichen frei von Wasser ist.

### Katalysator

Damit bei erniedrigten Einbrenntemperaturen bzw. verkürzten Einbrennzeiten aus den mono- bzw. oligomeren Bestandteilen ein polymeres, chemisch resistentes Netzwerk entstehen kann, enthält der Basislack mindestens einen Katalysator. Geeignete Katalysatoren sind die zur Vernetzung mit Melaminharzen üblicherweise eingesetzten und bekannten Katalysatoren, wie beispielsweise Sulfonsäure-Katalysatoren oder Phosphorsäure-Derivate wie Diphenylphosphit. Der oder die Katalysatoren werden in den üblichen und bekannten Mengen eingesetzt, beispielsweise 0,5 bis 5 Gew.-%, bezogen auf das Gesamtgewicht des Basislacks.

Der Basislack enthält vorzugsweise 1 bis 3 Gew.-%, bezogen auf das Gesamtgewicht des Basislacks, mindestens eines Sulfonsäure-Katalysators. Bevorzugt enthält der Basislack 1,2 bis 2,8 Gew.-%, besonders bevorzugt 1,4 bis 2,6 Gew.-%, jeweils bezogen auf das Gesamtgewicht des Basislacks, mindestens eines Sulfonsäure-Katalysators.

Geeignete Sulfonsäure-Katalysatoren sind beispielsweise Dodecylbenzolsulfonsäure (DDBSA), Dinonylnaphthalendisulfonsäure (DNNSA), para-Toluolsulfonsäure (p-TSA) sowie blockierte Sulfonsäure-Katalysatoren wie blockierte DDBSA, blockierte DNNSA oder blockierte p-TSA.

Vorzugsweise enthält der Basislack einen blockierten Sulfonsäure-Katalysator.

Als blockierte Sulfonsäure-Katalysatoren werden bevorzugt Amin- oder kovalentblockierte Sulfonsäure-Katalysatoren verwendet, um die Stabilität und die Haltbarkeit der Lacksysteme zu gewährleisten. Zur Blockierung der Sulfonsäure-Katalysatoren werden daher als Amine bevorzugt tertiär alkylierte oder heterocyclische Amine verwendet, wie beispielsweise 2-Amino-2-methylpropanol, Diisopropanolamin, Dimethyloxazolidin oder Trimethylamin. Als kovalent bindende Blockierungsmittel werden beispielsweise Epoxy- oder Epoxy-Isocyanat-Verbindungen eingesetzt. Solche blockierten Sulfonsäure-Katalysatoren werden detailliert in der Patentveröffentlichung U.S. Pat. No. 5.102.961 beschrieben.

### Weitere Bestandteile des Basislacks

Außer den vorstehend beschriebenen Komponenten kann der Basislack übliche und bekannte Hilfs- und Zusatzstoffe in üblichen Mengen, bevorzugt 0 bis 40 Gew.-%, besonders bevorzugt 0,5 bis 30 Gew.-%, jeweils bezogen auf das Gesamtgewicht des Basislacks, mindestens eines Hilfs- oder Zusatzstoffs (Z) enthalten.

Geeignete Hilfs- oder Zusatzstoffe (Z) sind die üblicherweise in der Lackindustrie eingesetzten, bekannten Hilfs- und Zusatzstoffe. Beispiele für geeignete Hilfs- und Zusatzstoffe sind organische und anorganische Füllstoffe, z.B. Talkum, und/oder Farbstoffe (organische, im umgebenden Medium lösliche schwarze oder bunte Substanzen (vgl. Römpp Lacke und Druckfarben, Seite 221, Stichwort "Farbmittel")) sowie weitere übliche Hilfs- und Zusatzstoffe, wie z.B. Antioxidantien, Entlüftungsmittel, Netzmittel, Dispergiermittel, Emulgatoren, Rheologiehilfsmittel wie Verlaufsmittel, Verdickungsmittel, Antiablaufmittel und Thixotropiermittel, Wachse und wachsartige Verbindungen, Slipadditive, Reaktiwerdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise UV-Absorber mit einem Absorptionsmaximum unter 370 nm und/oder HALS, Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, Wachse und wachsartige Verbindungen, UV-Absorber und Radikalfänger. Besonders bevorzugte Hilfs- und Zusatzstoffe sind UV-Absorber, Netzmittel sowie Wachse und wachsartige Verbindungen.

Ein weiterer Gegenstand der Erfindung ist ein Melaminharz-haltiger Basislack zur Herstellung einer Mehrschicht-Beschichtung, dadurch gekennzeichnet, dass
(i) alle im Basislack enthaltenen Aminoplastharze vollständig methylolierte, vollständig veretherte Melaminharze, bei denen mindestens 90% der veretherten Methylolgruppen mit Butanol verethert sind, sind und
(ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

### Klarlack

Die erfindungsgemäße Mehrschicht-Beschichtung umfasst mindestens eine Klarlackierung (A2). Die Klarlackierung (A2) bildet dabei die oberste Schicht der Mehrschichtlackierung, auf welche die Klebstoffschicht (B) folgt.

Zur Herstellung der Klarlackierung der erfindungsgemäßen Mehrschicht-Beschichtung sind als Klarlack die üblicherweise eingesetzten transparenten Beschichtungsmittel mit einem Aminoplastharz-Anteil von < 20 Gew.-%, bezogen auf den Festkörperanteil des transparenten Beschichtungsmittels, geeignet, wie beispielsweise üblicherweise eingesetzte wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke.

Geeignete transparente Beschichtungsmittel sind beispielsweise in der WO 03/050194 A1, in der US 2008/076868 A1 und in der WO 06/063304 A1 beschrieben. Bevorzugt werden carbamatgruppenhaltige transparente Beschichtungsmittel eingesetzt.

Bevorzugt weisen die transparenten Beschichtungsmittel (Klarlacke) einen Festkörperanteil von mindestens 50 Gew.-% auf. Die eingesetzten transparenten Beschichtungsmittel können thermisch und/oder mittels Strahlung, insbesondere mittels UV-Strahlung, härtbar sein.

Die transparenten Beschichtungsmittel enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere die folgenden zueinander jeweils komplementären Paare (a / b): (Carboxyl / Epoxy), (Amin oder Thiol oder Hydroxyl / blockiertes oder freies Isocyanat oder alkoxylierte Aminogruppen oder umesterungsfähige Gruppen), ((Meth)Acryloyl / CH-acide oder Amin oder Hydroxyl oder Thiol), (Carbamat / alkoxylierte Aminogruppen) und ((Meth)Acryloyl / (Meth)Acryloyl).

Eingesetzt werden insbesondere transparente Beschichtungsmittel auf Basis von Polyurethanharzen und/oder Polyacrylatharzen und/oder Polyesterharzen, bevorzugt mit Hydroxyl-, Amino-, Carbamat-, Carboxyl, (Meth)acryloyl- und/oder Thiolgruppen in Kombination mit den entsprechenden Vernetzern, insbesondere in Kombination mit Isocyanaten, Aminoplastharzen, Anhydriden u.ä.

Neben dem Bindemittel und Vernetzer enthalten die transparenten Beschichtungsmittel übliche Hilfs- und Zusatzstoffe, wie beispielsweise Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden.

### Klebstoff

Die erfindungsgemäße Mehrschicht-Beschichtung umfasst eine Klebstoffschicht (B) aus einem feuchtigkeitshärtenden, isocyanat-basierten Klebstoff. Die Klebstoffschicht (B) befindet sich unmittelbar auf der Klarlackierung (A2), welche die oberste Schicht der Mehrschichtlackierung (A) bildet. Somit befindet sich insbesondere keine Zwischenschicht aus Haftprimer zwischen der Mehrschichtlackierung und der Klebstoffschicht.

Die Klebstoffschicht (B) wird durch Aufbringen eines feuchtigkeitshärtenden, isocyanat-basierten Klebstoffes auf die Klarlackierung (A2) hergestellt. Geeignete Klebstoffe werden zum Beispiel in der Patentschrift US 5852137 beschrieben. Insbesondere geeignet sind die üblicherweise für die Verklebung von Windschutzscheiben eingesetzten, feuchtigkeitshärtenden, isocyanat-basierten Klebstoffe. Solche Klebstoffe können zum Beispiel unter der Bezeichnung "Betaseal®" von der Firma Dow Automotive im Handel erhalten werden. Feuchtigkeitshärtende, isocyanat-basierte Klebstoffe (Polyurethan-Klebstoffe) können im Allgemeinen als 1-Komponenten- (1K-) Klebstoffe oder auch als 2-Komponenten- (2K-) Klebstoffe eingesetzt werden. Besonders bevorzugt werden feuchtigkeitshärtende, isocyanat-basierte 1K-Klebstoffe eingesetzt.

### Schichtaufbau der Mehrschicht-Beschichtung

Die erfindungsgemäße Mehrschicht-Beschichtung umfasst eine Mehrschicht-Lackierung (A) und eine Klebstoffschicht (B). Die Klebstoffschicht befindet sich ohne weitere Zwischenschicht unmittelbar auf der obersten Schicht der Mehrschicht-Lackierung. Die oberste Schicht der Mehrschicht-Lackierung ist eine Klarlackierung (A2). Die Mehrschicht-Lackierung umfasst neben der Klarlackierung (A2) mindestens eine Basislackierung (A1). Bevorzugt weist die Mehrschicht-Lackierung der erfindungsgemäßen Mehrschicht-Beschichtung genau eine Basislackierung (A1) und genau eine Klarlackierung (A2) auf, wobei sich die Klarlackierung (A2) ohne weitere Zwischenschicht unmittelbar auf der Basislackierung (A1) befindet.

Die Mehrschicht-Lackierung kann weitere Schichten umfassen. Insbesondere kann die Mehrschicht-Lackierung eine weitere Basislackierung umfassen, die sich auf der Seite der Basislackierung (A1) befindet, welche von der Klarlackierung (A2) abgewandt ist. Als weitere Basislackierung in dieser 3-Schicht-Lackierung sind alle in der Automobillackierung für diesen Zweck üblichen Basislackierungen geeignet.

### Herstellung der Mehrschicht-Beschichtung

Ein weiterer Gegenstand der Erfindung ist ein Verfahren zur Herstellung einer Mehrschicht-Beschichtung, umfassend die Schritte
(a) Beschichten eines Substrats mit einer Mehrschicht-Lackierung,umfassend
   (A1) mindestens eine Basislackierung aus einem Basislack enthaltend mindestens ein Melaminharz, und
   (A2) mindestens eine Klarlackierung als oberste Schicht der Mehrschicht-Lackierung,
(b) Aushärten der Mehrschicht-Lackierung, und
(c) Aufbringen einer Klebstoffschicht aus einem feuchtigkeitshärtenden, isocyanat-basierten Klebstoff unmittelbar auf die oberste Klarlackschicht der Mehrschicht-Lackierung,
dadurch gekennzeichnet, dass
(i) alle im Basislack enthaltenen Aminoplastharze vollständig methylolierte, vollständig veretherte Melaminharze, bei denen mindestens 90% der veretherten Methylolgruppen mit Butanol verethert sind, sind und
(ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

Die erfindungsgemäße Mehrschicht-Beschichtung kann auf beliebigen Substraten hergestellt werden. Die Substrate können aus den unterschiedlichsten Materialien und Kombinationen von Materialien aufgebaut sein. Vorzugsweise bestehen sie aus Metallen, Kunststoffen und/oder Glas, besonders bevorzugt aus Metall und/oder Kunststoff. Ganz besonders bevorzugt handelt es sich bei dem Substrat um ein Teil einer Automobilkarosserie.

Die Substrate sind üblicherweise mit einer Grundierung und ggf. einem Füller versehen, die mit den üblichen Verfahren, wie Elektrotauchlackierung, Tauchen, Rakeln, Spritzen, Walzen o. ä., appliziert werden. Bevorzugt wird die Grundierung zumindest teilweise oder vollständig ausgehärtet, ehe der mindestens eine Basislack der Mehrschicht-Lackierung appliziert wird. Die Aushärtung der Grundierung bzw. des Füllers erfolgt üblicherweise durch Erhitzen auf eine Temperatur zwischen 80 und 170°C für eine Zeit von 3 bis 30 min.

Bei dem erfindungsgemäßen Verfahren zur Herstellung einer Mehrschicht-Beschichtung wird zunächst eine Mehrschicht-Lackierung (A) und anschließend eine Klebstoffschicht (B) auf das gegebenenfalls vorbeschichtete Substrat appliziert.

Zur Herstellung der Mehrschicht-Lackierung (A) wird in der Reihenfolge zunächst mindestens eine Basislackierung (A1) aus einem Basislack und anschließend mindestens eine Klarlackierung (A2) aus einem Klarlack auf ein gegebenenfalls vorbeschichtetes Substrat appliziert.

Basis- und Klarlacke können mittels üblicher Verfahren zur Applikation von flüssigen Beschichtungsmitteln, wie beispielsweise Tauchen, Rakeln, Spritzen, Walzen o.ä., insbesondere aber mittels Spritzen, appliziert werden. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Besonders vorteilhaft ist es, den Basislack in einem ersten Auftrag durch ESTA und einem zweiten Auftrag pneumatisch zu applizieren.

Vor der Applikation des Klarlacks wird die mindestens eine aufgetragene Basislackschicht üblicherweise kurz abgelüftet oder kurz getrocknet, im Allgemeinen bei einer Temperatur zwischen 30 und kleiner 100°C für eine Zeit von 1 bis 15 min. Danach kann der Klarlack appliziert werden (Nass-in-Nass-Verfahren).

Basis- und Klarlack werden gemeinsam thermisch gehärtet. Sofern der Klarlack auch noch mit aktinischer Strahlung härtbar ist, erfolgt noch eine Nachhärtung durch Bestrahlung mit aktinischer Strahlung. Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90°C und/oder durch eine reduzierte Luftfeuchte (< 10 g Wasser/kg Luft) unterstützt und/oder verkürzt werden, sofern hierbei keine Schädigungen oder Veränderungen der Lackschichten eintreten, etwa eine vorzeitige vollständige Vernetzung.

Die Aushärtung der Mehrschicht-Lackierung erfolgt üblicherweise bei einer Temperatur zwischen 90 und 160°C während einer Zeit von 15 bis 90 min.

Für die Trocknung bzw. Konditionierung der nassen Basislackschicht(en) sowie der nassen Klarlackschicht(en) werden bevorzugt thermische und/oder Konvektionsverfahren verwendet, wobei übliche und bekannten Vorrichtungen, wie Durchlauföfen, NIR- und IR- Heizstrahler, Gebläse und Blastunnel, eingesetzt werden. Diese Vorrichtungen können auch miteinander kombiniert werden.

Bei den Mehrschichtlackierungen der erfindungsgemäßen Mehrschicht-Beschichtung weist die Basislackierung (A1) im Allgemeinen eine Trockenfilmschichtdicke von 3 bis 40 µm, vorteilhafterweise von 5 bis 30 µm, noch vorteilhafter von 10 bis 25 µm und besonders bevorzugt von 15 bis 25 µm auf.

Bei den Mehrschichtlackierungen der erfindungsgemäßen Mehrschicht-Beschichtung weist die Klarlackierung (A2) im Allgemeinen eine Trockenfilmschichtdicke von 10 bis 120 µm, bevorzugt von 20 bis 80 µm, insbesondere von 25 bis 50 µm und besonders bevorzugt von 25 bis 45 µm, auf.

Bevorzugt umfasst die erfindungsgemäße Mehrschicht-Beschichtung genau eine Basislackierung mit einer Trockenfilmschichtdicke von 10 bis 25 µm und genau eine Klarlackierung mit einer Trockenfilmschichtdicke von 25 bis 70 µm auf.

Zur Herstellung der Klebstoffschicht (B) wird ein feuchtigkeitshärtender, isocyanat-basierter Klebstoff unmittelbar, d.h. ohne weitere Zwischenschicht, auf die oberste Klarlackschicht der ausgehärteten, abgekühlten Mehrschicht-Lackierung (A) aufgebracht. Der feuchtigkeitshärtende, isocyanat-basierte Klebstoff kann mittels der üblichen und geeigneten Verfahren, wie beispielsweise Spritzen, und in den üblichen Klebstoffschichtdicken von 0,1 bis 5 mm appliziert werden.

### Verwendung der Mehrschicht-Beschichtung

Ein weiterer Gegenstand der Erfindung ist die Verwendung einer Mehrschicht-Beschichtung zur Verklebung von Glasscheiben auf einem mit der Mehrschicht-Beschichtung beschichteten Substrat, umfassend die Schritte
(a) Beschichten des Substrats mit einer Mehrschicht-Lackierung, umfassend
   (A1) mindestens eine Basislackierung aus einem Basislack enthaltend mindestens ein Melaminharz, und
   (A2) mindestens eine Klarlackierung als oberste Schicht der Mehrschicht-Lackierung,
(b) Aushärten der Mehrschicht-Lackierung,
(c) Aufbringen einer Klebstoffschicht aus einem feuchtigkeitshärtenden, isocyanat-basierten Klebstoff unmittelbar auf die oberste Klarlackschicht der Mehrschicht-Lackierung, und
(d) Aufbringen einer Glasscheibe auf die Klebstoffschicht und Aushärtung des Klebstoffs,
dadurch gekennzeichnet, dass
entweder (i) alle im Basislack enthaltenen Aminoplastharze vollständig methylolierte, vollständig veretherte Melaminharze, bei denen mindestens 90% der veretherten Methylolgruppen mit Butanol verethert sind, sind,
oder (ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält,
oder (iii) alle im Basislack enthaltenen Aminoplastharze vollständig methylolierte, vollständig veretherte Melaminharze, bei denen mindestens 90% der veretherten Methylolgruppen mit Butanol verethert sind, sind und
der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

In einer bevorzugten Ausführungsform sind alle im Basislack enthaltenen Aminoplastharze aus der Gruppe der überwiegend butylierten Melaminharze, d.h. der Gruppe der vollständig methylolierten, vollständig veretherten Melaminharze, bei denen mindestens 90% der veretherten Methylolgruppen mit Butanol verethert sind, ausgewählt und der Basislack enthält mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g.

Bevorzugt ist das Substrat ein Teil einer Automobilkarosserie.

Unter "Verklebung" wird das auf Dauer angelegte Befestigen einer Glasscheibe auf oder an dem Substrat mittels der erfindungsgemäßen Mehrschicht-Beschichtung verstanden.

Als Glasscheiben kommen alle üblichen und bekannten Glasscheiben in Frage. Bevorzugt handelt es sich bei der Glasscheibe um eine Windschutzscheibe.

Zu den Schritten (a) Beschichten des Substrats mit der Mehrschicht-Lackierung, (b) Aushärten der Mehrschicht-Lackierung und (c) Aufbringen einer Klebstoffschicht gilt das oben bereits Gesagte.

Beim Schritt (d) "Aufbringen einer Glasscheibe auf die Klebstoffschicht und Aushärtung des Klebstoffs" kann wie folgt vorgegangen werden. Die gereinigte Glasscheibe wird auf die frisch applizierte Klebstoffschicht aufgebracht, fixiert und angedrückt. Die Aushärtung des Klebstoffs kann bei einer ausreichenden Luftfeuchte bei Raumtemperatur durchgeführt werden. Die Aushärtung des Klebstoffs kann beispielsweise bei einer Luftfeuchtigkeit von 50% relativer Feuchte und einer Temperatur von 25°C über 72 h erfolgen.

### Beispiele

In den Beispielen wird die Säurezahl (SZ) nach DIN 53402 und die OH-Zahl (Hydroxylzahl) nach DIN 53240 bestimmt.

Der Festkörpergehalt wird im Regelfall nach DIN ISO 3251 mit einer Einwaage von 1,0 g bei einer Prüfdauer von 60 min bei einer Temperatur von 125°C bestimmt. Diese Parameter gelten stets, sofern nicht im Einzelfall für einzelne Parameter hiervon abweichende Werte angegeben werden.

### 1. Herstellung einer Wachsdispersion (W)

6,0 Gew.-Teile des Polyethylenwachses EVA 1 der BASF AG (handelsübliches Polyethylenwachs auf Basis eines Ethylen/Vinylacetat-Copolymeren mit einem Schmelzpunkt von 87-92 °C, einem Tropfpunkt nach Ubbelohde von ca. 95°C und einem massenmittleren Molekulargewicht von ca. 6500 g/mol) und 40,0 Gew.-Teile Xylol werden unter langsamem Rühren bei 100°C gelöst. Unter weiterem Rühren läßt man die Lösung auf 70°C abkühlen und gibt langsam 54,0 Gew.-Teile Butylacetat (technisch, ca. 85%ig) zu, wobei eine erwünschte Wachsfällung beginnt. Unter weiterem Rühren läßt man die Dispersion weiter bis auf 35°C abkühlen.

### 2. Herstellung von Polymermikroteilchen (M)

Für die Herstellung von Polymermikroteilchen wird zunächst ein Trägerharz hergestellt. Dazu werden in einem Reaktor 5,8 Gew.-Teile Xylol, 5,8 Gew.-Teile Toluol und 0,2 Gew.-Teile Methansulfonsäure vorgelegt und auf 104°C erhitzt. Anschließend werden dem Reaktor 80,6 Gew.-Teile 12-Hydroxystearinsäure zugeführt und das Reaktionsgemisch bei 171 °C im Rückfluss unter Entzug des Reaktionswassers gekocht. Die Reaktion ist bei Erreichen einer Säurezahl von 35 mg KOH/g, bezogen auf den Festkörpergehalt des Produkts (1 h / 130°C), beendet. Nach Abkühlen wird der Festkörpergehalt mit 8,0 Gew.-Teilen Solventnaphtha auf 80%, bezogen auf das Gesamtgewicht der Trägerharzlösung, eingestellt.

In einem zweiten Schritt werden in einem Reaktor 43,2 Gew.-Teile Solventnaphtha, 0,08 Gew.-Teile N,N-Dimethylcocosamin und 1,0 Gew.-Teile Ethylacetat vorgelegt und auf 104°C erhitzt. Der Reaktor wird bei einem Druck von 0,69 bar innerhalb von 2 h simultan mit einer Monomerenmischung, bestehend aus 27,6 Gew.-Teilen Methylmethacrylat, 3,8 Gew.-Teilen 2-Hydroxypropylmethacrylat, 0,8 Gew.-Teilen Glycidylmethacrylat, 12,8 Gew.-Teilen der oben beschriebenen Trägerharzlösung, 1,5 Gew.-Teilen Methacrylsäure und 1,5 Gew.-Teilen Octylmercaptan, und einer Initiatormischung, bestehend aus 2,3 Gew.-Teilen Tert.-Butylperoxy-2-ethylhexanoat und 5,1 Gew.-Teilen Solventnaphtha, versetzt. Anschließend wird 3 h bei oben genannter Temperatur und Druck gehalten, bevor abgekühlt und mit Solventnaphtha auf einen Festkörper von 41,0% eingestellt wird.

### 3. Herstellung eines Acrylat-Bindemittels (AC)

In einem Reaktor werden 13,2 Gew.-Teile Solvesso 100 vorgelegt und auf 167°C erhitzt. Der Reaktor wird bei einem Druck von 0,35 bar und über einen Zeitraum von 4 h simultan mit einer Monomerenmischung, bestehend aus 2,1 Gew.-Teilen Acrylsäure, 10,8 Gew.-Teilen Hydroxyethylacrylat, 11,5 Gew.-Teilen 2-Ethylhexylacrylat, 11,5 Gew.-Teilen Butylacrylat und 14,3 Gew.-Teilen Styrol, und einer Initiatormischung, bestehend aus 0,7 Gew.-Teilen Di-tert.-Butylperoxid und 11,1 Gew.-Teilen einer Lösung von Dicumylperoxid in Solvesso 100 (50%-ig), versetzt. Anschließend wird 1 h bei oben genannter Temperatur und Druck gehalten, bevor über einen Zeitraum von 1 h 21,5 Gew.-Teile ε-Caprolacton zugegeben werden. Es wird auf 150°C abgekühlt und 1,5 h bei einem Druck von 0,35 bar gehalten. Das Reaktionsgemisch wird abgekühlt und mit Solvesso 100 auf einen Festkörper von 75% eingestellt. Das so erhaltene Acrylatharz weist eine Säurezahl von 23 mg KOH/g und eine OH-Zahl von 73 mg KOH/g, jeweils bezogen auf den Festkörper, auf.

### 4. Herstellung von stabilisierten anorganischen Teilchen (N)

In einer Vorlage werden 10,0 Gew.-Teile des unter 3. beschriebenen Acrylat-Bindemittels (AC), 6,0 Gew.-Teile Degussa Aerosil® 380 (handelsübliche hydrophile pyrogene Kieselsäure der Firma Degussa AG mit einer spezifischen Oberfläche (BET) von 380 m²/g, einer mittleren Größe der Primärteilchen von 7 nm und einem SiO₂-Gehalt von mindestens 99,8 Gew.%, bezogen auf die geglühte Substanz), 41,7 Gew.-Teile Solventnaphtha, 41,7 Gew.-Teile Butylacetat und 0,6 Gew.-Teile eines Fettsäureesters als Stabilisierungsmittel (S) mit einem nichtflüchtigen Anteil von 96,2 % (bei 2 h bei 130°C), einer OH-Zahl von 50 mg KOH/g und einer Säurezahl von 17,2 mg KOH/g, jeweils bezogen auf den 130°C-Festkörpergehalt, enthaltend 6-Hydroxycapronsäure, Hydroxyvaleriansäure, Laurinsäure und Polyethylenglykol (beispielsweise das handelsübliche Benetzungsadditiv auf Basis von Fettsäureestern Solsperse 39000 der Firma Th. Goldschmidt) gemischt und dispergiert.

### 5. Herstellung des Polyester-Bindemittels (PE)

Eine Mischung aus 36,6 Gew.-Teilen Dicarbonsäuregemisch, 27,8 Gew.- Teilen Hexandiol und 35,6 Gew.-Teilen Cyclohexandimethanol wird in einem mit einem Wasserabscheider ausgestatteten Rührkessel vorgelegt und unter Stickstoffatmosphäre unter Rühren auf 230 °C erhitzt. Das dabei freigesetzte Wasser wird in einem Wasserabscheider aufgefangen. Die Reaktionsmischung wird so lange bei 230 °C gehalten, bis die Säurezahl einen Wert von 4 mg KOH/g unterschreitet. Die resultierende Mischung weist einen Festkörpergehalt von 90,0% und eine Viskosität von 380 mPas (bei 50°C) auf.Der resultierende Polyester hat eine Säurezahl von 2,2 mg KOH/g und eine OH-Zahl von 280 mg KOH/g, jeweils bezogen auf den Festkörper.

### 6. Herstellung einer CAB-Lösung (C)

In einer Vorlage werden 76,0 Gew.-Teile Butylacetat mit 24,0 Gew.-Teilen CAB 551-0.2 (handelsübliche Celluloseacetobutyrat der Firma Eastman) für 30 min gemischt.

### 7. Herstellung einer Paste eines Aluminiumeffektpigmentes

Die Paste wird aus 50,0 Gew.-Teilen einer handelsüblichen non-leafing Aluminiumeffektpigmentpaste vom Silberdollar-Typ mit einer mittleren Teilchengröße von 14 µm (Metallux 2192 der Firma Eckart) und 50,0 Gew.-Teilen Butylacetat unter Rühren hergestellt.

### 8. Herstellung des Vergleichs-Metallic-Basislackes BC-1 (ohne Polyester und mit hydrophilem Melamin)

Der Vergleichs-Metallic-Basislack BC-1 wird durch Vermischen und Homogenisieren der folgenden Bestandteile hergestellt:
10,0 Gew.-Teile der unter 1. beschriebenen Wachsdispersion (W),
22,0 Gew.-Teile der unter 2. beschriebenen Polymermikroteilchen (M),
11,5 Gew.-Teile Resimene® 755 (handelsübliches, monomeres hydrophiles Hexamethoxy-methyl/butyl-Melaminharz der Firma Ineos Melamines),
4,0 Gew.-Teile der unter 4. beschriebenen stabilisierten anorganischen Teilchen (N),
0,5 Gew.-Teile eines handelsüblichen, silikonfreien Benetzungsadditivs auf Basis eines aminharzmodifizierten Acrylcopolymers,
0,8 Gew.-Teile eines handelsüblichen, Hydroxyphenyl-Benztriazol-basierten UV-Absorbers,
22,0 Gew.-Teile des unter 3. beschriebenen Acrylat-Bindemittels (AC),
1,7 Gew.-Teile eines handelsüblichen Amin-blockierten Dodecylbenzolsulfonsäure-(DDBSA-) Katalysators,
3,0 Gew.-Teile der unter 6. beschriebenen CAB-Lösung (C),
14,0 Gew.-Teile der unter 7. beschriebenen Paste eines Aluminiumeffektpigments
6,4 Gew.-Teile Butylacetat.
Der so erhaltene Vergleichs-Metallic-Basislack BC-1 weist eine Spritzviskosität von 21 sec im Ford Cup 3-Auslaufbecher (23°C) und einen Festkörpergehalt von 40,2 Gew.-% auf (1 h/125°C).

### 9. Herstellung des erfindungsgemäß verwendbaren Metallic-Basislackes BC-2 (mit Polyester und mit hydrophilem Melamin)

Der Metallic-Basislack BC-2 wird durch Vermischen und Homogenisieren der folgenden Bestandteile hergestellt:
10,0 Gew.-Teile der unter 1. beschriebenen Wachsdispersion (W),
22,0 Gew.-Teile der unter 2. beschriebenen Polymermikroteilchen (M),
11,5 Gew.-Teile Resimene® 755 (handelsübliches, monomeres hydrophiles Hexamethoxy-methyl/butyl-Melaminharz der Firma Ineos Melamines),
8,0 Gew.-Teile der unter 4. beschriebenen stabilisierten anorganischen Teilchen (N),
0,5 Gew.-Teile eines handelsüblichen, silikonfreien Benetzungsadditivs auf Basis eines aminharzmodifizierten Acrylcopolymers,
0,8 Gew,-Teile eines handelsüblichen, Hydroxyphenyl-Benztriazol-basierten UV-Absorbers,
17,0 Gew.-Teile des unter 3. beschriebenen Acrylat-Bindemittels (AC),
3,3 Gew.-Teile des unter 5. beschriebenen Polyester-Bindemittels (PE),
117 Gew.-Teile eines handelsüblichen Amin-blockierten Dodecylbenzolsulfonsäure-(DDBSA-) Katalysators,
3,0 Gew.-Teile der unter 6. beschriebenen CAB-Lösung (C),
14,0 Gew.-Teile der unter 7. beschriebenen Paste eines Aluminiumeffektpigments,
8,1 Gew.-Teile Butylacetat.

Der so erhaltene Metallic-Basislack BC-2 weist eine Spritzviskosität von 22 sec im Ford Cup 3-Auslaufbecher (23°C) und einen Festkörpergehalt von 41,2 Gew.-% auf (1 h/125°C).

### 10. Herstellung des erfindungsgemäß verwendbaren Metallic-Basislackes BC-3 (ohne Polyester und mit hydrophobem Melamin)

Der Metallic-Basislack BC-3 wird durch Vermischen und Homogenisieren der folgenden Bestandteile hergestellt:
10,0 Gew.-Teile der unter 1. beschriebenen Wachsdispersion (W),
22,0 Gew.-Teile der unter 2. beschriebenen Polymermikroteilchen (M),
11,8 Gew.-Teile Cymel 1156 (handelsübliches, monomeres hydrophobes Hexamethoxybutyl-Melaminharz der Firma Cytec Specialities),
8,0 Gew.-Teile der unter 4. beschriebenen stabilisierten anorganischen Teilchen (N),
0,5 Gew.-Teile eines handelsüblichen, silikonfreien Benetzungsadditivs auf Basis eines aminharzmodifizierten Acrylcopolymers,
0,8 Gew.-Teile eines handelsüblichen, Hydroxyphenyl-Benztriazol-basierten UV-Absorbers,
22,0 Gew.-Teile des unter 3. beschriebenen Acrylat-Bindemittels (AC),
1,7 Gew.-Teile eines handelsüblichen Amin-blockierten Dodecylbenzolsulfonsäure-(DDBSA-) Katalysators,
3,0 Gew.-Teile der unter 6. beschriebenen CAB-Lösung (C),
14,0 Gew.-Teile der unter 7. beschriebenen Paste eines Aluminiumeffektpigments,
6,1 Gew.-Teile Butylacetat.
Der so erhaltene Metallic-Basislack BC-3 weist eine Spritzviskosität von 21 sec im Ford Cup 3-Auslaufbecher (23°C) und einen Festkörpergehalt von 40,8 Gew.-% auf (1 h/125°C).

### 11. Herstellung des erfindungsgemäßen Metallic-Basislackes BC-4 (mit Polyester und mit hydrophobem Melamin)

Der erfindungsgemäße Metallic-Basislack BC-4 wird durch Vermischen und Homogenisieren der folgenden Bestandteile hergestellt:
10,0 Gew.-Teile der unter 1. beschriebenen Wachsdispersion (W),
22,0 Gew.-Teile der unter 2. beschriebenen Polymermikroteilchen (M),
11,8 Gew.-Teile Cymel 1156 (handelsübliches, monomeres hydrophobes Hexamethoxybutyl-Melaminharz der Firma Cytec Specialities),
8,0 Gew.-Teile der unter 4. beschriebenen stabilisierten anorganischen Teilchen (N),
0,5 Gew.-Teile eines handelsüblichen, silikonfreien Benetzungsadditivs auf Basis eines aminharzmodifizierten Acrylcopolymers,
0,8 Gew.-Teile eines handelsüblichen, Hydroxyphenyl-Benztriazol-basierten UV-Absorbers,
17,0 Gew.-Teile des unter 3. beschriebenen Acrylat-Bindemittels (AC),
3,3 Gew.-Teile des unter 5. beschriebenen Polyester-Bindemittels (PE),
1,7 Gew.-Teile eines handelsüblichen Amin-blockierten Dodecylbenzolsulfonsäure-(DDBSA-) Katalysators,
3,0 Gew.-Teile der unter 6. beschriebenen CAB-Lösung (C),
14,0 Gew.-Teile der unter 7. beschriebenen Paste eines Aluminiumeffektpigments,
7,8 Gew.-Teile Butylacetat.
Der so erhaltene erfindungsgemäße Metallic-Basislack BC-4 weist eine Spritzviskosität von 20 sec im Ford Cup 3-Auslaufbecher (23°C) und einen Festkörpergehalt von 40,7 Gew.-% auf (1 h/125°C).

### 12. Herstellung der Mehrschicht-Lackierungen M-1 bis M-8

Für die Prüfung der Scheibenverklebungshaftung vor und nach Schwitzwasser-Belastung wurden die Original-Lackierungen M-1 bis M-4 der Beispiellacke BC-1 bis BC-4 in üblicher und bekannter Weise auf Prüftafeln der Abmessungen 20 x 40 cm hergestellt. Hierzu wurden KTL-beschichtete Tafeln mit einem handelsüblichen konventionellen, grauen Füller auf Polyester-Basis der Firma BASF Coatings AG beschichtet, wonach die resultierenden Füllerschichten für 5 min bei 20°C und einer relativen Luftfeuchtigkeit von 65% abgelüftet und in einem Umluftofen für 5 min bei 165°C Objekttemperatur eingebrannt wurden.

Nach dem Abkühlen der Prüftafeln auf 20 °C wurden in einer ersten Serie die Basislacke BC-1 bis BC-4 durch ESTA-Spritzautomatenapplikation mittels einer KeilApplikation in Trockenfilmschichtdicken von 0-40 µm aufgetragen. Anschließend wurden die Basislackschichten während 5 Minuten abgelüftet und mit einem handelsüblichen High Solid 1K Klarlack der Firma BASF Coatings AG mit einer Trockenfilmschichtdicke von 25 µm überschichtet. Hiernach wurden die Basislackschichten und die Klarlackschichten für 10 Minuten bei 140°C Objekttemperatur eingebrannt.

In einer zweiten Serie wurden die Original-Lackierungen M-5 bis M-8 der Beispiellacke BC-1 bis BC-4 auf die abgekühlten Prüftafeln durch ESTA-Spritzautomatenapplikation mit einer konstanten Trockenfilmschichtdicke von 25 µm aufgetragen. Anschließend wurden die Basislackschichten während 5 Minuten abgelüftet und mit einem handelsüblichen High Solid 1K Klarlack der Firma BASF Coatings AG mittels einer ESTA-Keilapplikation mit einer Trockenfilmschichtdicke von 0-50 µm überschichtet. Hiernach wurden die Basislackschichten und die Klarlackschichten für 10 Minuten bei 140°C Objekttemperatur eingebrannt.

### 13. Herstellung und Prüfung der Mehrschicht-Beschichtungen M-1 bis M-8

Zur Herstellung der Mehrschicht-Beschichtungen M-1 bis M-8 wurde auf die mit den Mehrschicht-Lackierungen M-1 bis M-8 beschichteten Prüftafeln nach 24 h Lagerung bei Raumtemperatur die Scheibenverklebungsmasse Betaseal® 1858-1, (feuchtigkeitshärtender, isocyanat-basierter Klebstoff, handelsüblich erhältlich von Dow Automotive), streifenförmig über die komplette Klarlackschicht der Mehrschichtaufbauten M-1 bis M-8 in Längsrichtung aufgebracht (ca. 3 mm dick, 10 mm breit). Der Klebstoff wird für 72 h bei 50% Luftfeuchtigkeit und 25°C aushärten gelassen.

Nach vollständiger Aushärtung des Klebstoffs wird ein sogenannter Quick-Knife-Test durchgeführt. Dazu werden Schnitte in einem Abstand von jeweils 12 mm vertikal zur Klebemasse angebracht und an der ausgehärteten Klebemasse in Längsrichtung manuell gezogen. Kommt es hierbei ausschließlich zu einem Riss innerhalb der Klebstoffmasse, so wird die Zwischenhaftung Klebstoff / Mehrschicht-Lackierung und damit auch die Scheibenverklebungshaftung als ausreichend beurteilt. Kommt es zu einer Delamination Klebstoff / Klarlack oder einem Bruch innerhalb der Mehrschicht-Lackierung, so ist eine ausreichende Scheibenverklebungshaftung nicht mehr gegeben. Da die Scheibenverklebungshaftung üblicherweise insbesondere bei einer höheren Basislackschichtstärke und/oder einer geringeren Klarlackschichtstärke problematisch ist, wird diejenige Basislack- (M-1 bis M-4) oder Klarlackschichtstärke (M-5 bis M-8) angegeben, ab der es zu einer Delamination kommt.

Die Scheibenverklebungshaftung wird auf diese Weise bei Raumtemperatur und vor einer Schwitzwasser-Belastung geprüft. Des weiteren wird die Scheibenverklebungshaftung auch nach einer Schwitzwasser-Belastung geprüft. Hierzu werden die Mehrschicht-Beschichtungen M-1 bis M-8 für 14Tage in einem Schwitzwassergerät bei 40°C und 100% relativer Luftfeuchtigkeit gelagert. Nach 2 h Regeneration wird auf den belasteten Mehrschicht-Beschichtungen M-1 bis M-8 der oben beschriebene Quick-Knife-Test durchgeführt.

In Tabelle 1 sind die Ergebnisse des Quick-Knife-Tests der Mehrschichtaufbauten der Vergleichs-Beschichtungen M-1 und M-5 sowie der Mehrschicht-Beschichtungen M-2 bis M-4 und M-6 bis M-8 zusammengefasst.

**Tabelle 1: Ergebnisse des Quick-Knife-Tests der Mehrschichtaufbauten der Vergleichs-Beschichtungen M-1 und M-5 sowie der Mehrschicht-Beschichtungen M-2 bis M-4 und M-6 bis M-8.**

| Mehrschicht-Beschichtung | Basislack | PE-Bindemittel | Melamin | Schichtdicke Basislack [µm] | Schichtdicke Klarlack [µm] | MVVS nach Ford WSK-M11P75-A1 | |
|---|---|---|---|---|---|---|---|
| | | | | | | vor Schwitzwasser | nach Schwitzwasser |
| M-1 | BC-1 | nein | hydrophil | 0-40 | 25 | < 24 | < 20 |
| M-2 | BC-2 | ja | hydrophil | 0-40 | 25 | < 30 | < 26 |
| M-3 | BC-3 | nein | hydrophob | 0-40 | 25 | < 29 | < 27 |
| M-4 | BC-4 | ja | hydrophob | 0-40 | 25 | < 35 | < 31 |
| M-5 | BC-1 | nein | hydrophil | 25 | 0-50 | > 27 | > 33 |
| M-6 | BC-2 | ja | hydrophil | 25 | 0-50 | > 17 | > 19 |
| M-7 | BC-3 | nein | hydrophob | 25 | 0-50 | > 20 | > 22 |
| M-8 | BC-4 | ja | hydrophob | 25 | 0-50 | > 12 | > 15 |

Tabelle 1 zeigt, dass die Scheibenverklebungshaftung der Mehrschicht-Beschichtungen M-2 bis M-4 bei einer relativ geringen Klarlack-Schichtstärke (25 µm) auch ohne Verwendung eines Haftprimers bis zu einer relativ hohen Basislack-Schichtstärke (26 µm bis 35 µm) gut ausgeprägt ist, wohingegen die Scheibenverklebungshaftung in der Vergleichs-Beschichtung M-1 nur hinauf bis zu Basislackschichten einer Stärke von höchstens 24 µm bzw. höchstens 20 µm (nach Schwitzwasser-Belastung) ausreichend ist. Die Mehrschicht-Beschichtungen M-2 bis M-4 zeigen somit eine verbesserte Scheibenverklebungshaftung, sowohl vor als auch nach Schwitzwasser-Belastung. Eine besonders gute Scheibenverklebungshaftung zeigt die Mehrschicht-Beschichtung M-4, deren Basislack sowohl ein Polyester-Bindemittel mit einer Hydroxylzahl von mehr als 240 mg KOH/g und einer Säurezahl von höchstens 10 mg KOH/g als auch ausschließlich vollständig butylierte Melaminharze enthält.

Tabelle 1 zeigt weiterhin, dass die Scheibenverklebungshaftung der Mehrschicht-Beschichtungen M-6 bis M-8 bei einer relativ hohen Basislack-Schichtstärke (25 µm) auch ohne Verwendung eines Haftprimers bis hinunter zu einer relativ niedrigen Klarlack-Schichtstärke (22 µm bis 12 µm) gut ausgeprägt ist, wohingegen die Scheibenverklebungshaftung in der Vergleichs-Beschichtung M-5 nur bei Klarlackschichten einer Stärke von mindestens 27 µm bzw. mindestens 33 µm (nach Schwitzwasser-Belastung) ausreichend ist. Die Mehrschicht-Beschichtungen M-6 bis M-8 zeigen somit eine verbesserte Scheibenverklebungshaftung, sowohl vor als auch nach Schwitzwasser-Belastung. Eine besonders gute Scheibenverklebungshaftung zeigt die Mehrschicht-Beschichtung M-8, deren Basislack sowohl ein Polyester-Bindemittel mit einer Hydroxylzahl von mehr als 240 mg KOH/g und einer Säurezahl von höchstens 10 mg KOH/g als auch ausschließlich vollständig butylierte Melaminharze enthält.

Die Ergebnisse zeigen eindeutig, dass durch den Einsatz eines Polyester-Bindemittels im Basislack mit einer OH-Zahl von 280 mg KOH/g und/oder die alleinige Verwendung von hydrophoben, vollständig butylierten Melaminharzen die Scheibenverklebungshaftung bei hohen Basislackschichten und/oder niedrigen Klarlackschichten verbessert werden kann. Dabei resultiert aus der Kombination der beiden oben genannten Änderungen eine besonders ausgeprägte Verbesserung der Scheibenverklebungshaftung. Die Scheibenverklebungshaftung ist sowohl vor als auch nach einer Schwitzwasserbelastung deutlich verbessert, ohne dass ein zusätzlicher Haftprimer eingesetzt werden muss.

## Patentansprüche

1. Mehrschicht-Beschichtung, umfassend
(A) eine Mehrschicht-Lackierung, umfassend
(A1) mindestens eine Basislackierung aus einem Basislack enthaltend mindestens ein Melaminharz, und
(A2) mindestens eine Klarlackierung als oberste Schicht der Mehrschicht-Lackierung, und
(B) eine Klebstoffschicht aus einem feuchtigkeitshärtenden, isocyanat-basierten Klebstoff unmittelbar auf der obersten Klarlackschicht der Mehrschicht-Lackierung,
**dadurch gekennzeichnet, dass**
(i) alle im Basislack enthaltenen Aminoplastharze vollständig methylolierte, vollständig veretherte Melaminharze, bei denen mindestens 90% der veretherten Methylolgruppen mit Butanol verethert sind, sind und
(ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

2. Mehrschicht-Beschichtung nach Anspruch 1, **dadurch gekennzeichnet, dass** alle im Basislack enthaltenen Aminoplastharze einen Anteil der mit Butanol veretherten Methylolgruppen von mindestens 95%, bezogen auf alle veretherten Methylolgruppen, aufweisen.

3. Mehrschicht-Beschichtung nach einem der vorhergehenden Ansprüche, **dadurch gekennzeichnet, dass** der Basislack 8 bis 15 Gew.-%, bezogen auf das Gesamtgewicht des Basislacks, des mindestens einen Melaminharzes enthält.

4. Mehrschicht-Beschichtung nach einem der vorhergehenden Ansprüche, **dadurch gekennzeichnet, dass** der Basislack 1 bis 6 Gew.-%, bezogen auf das Gesamtgewicht des Basislacks, des mindestens einen Polyester-Bindemittels enthält.

5. Mehrschicht-Beschichtung nach einem der vorhergehenden Ansprüche, **dadurch gekennzeichnet, dass** das mindestens eine Polyester-Bindemittel eine Hydroxylzahl von 270 mg KOH/g bis 300 mg KOH/g und eine Säurezahl von höchstens 10 mg KOH/g aufweist.

6. Mehrschicht-Beschichtung nach einem der vorhergehenden Ansprüche, **dadurch gekennzeichnet, dass** das mindestens eine Polyester-Bindemittel Struktureinheiten enthält, die auf aliphatische, cycloaliphatische und/oder aromatische Di- bzw. Polycarbonsäuren und auf Di- bzw. Polyole zurückgehen.

7. Mehrschicht-Beschichtung nach einem der vorhergehenden Ansprüche, **dadurch gekennzeichnet, dass** das mindestens eine Polyester-Bindemittel ein gewichtsmittleres Molekulargewicht von 400 bis 2500 g/mol aufweist.

8. Mehrschicht-Beschichtung nach einem der vorhergehenden Ansprüche, **dadurch gekennzeichnet, dass** die mindestens eine Basislackierung eine Trockenfilmschichtdicke von 10 bis 25 µm, bevorzugt von 15 bis 25 µm aufweist.

9. Mehrschicht-Beschichtung nach einem der vorhergehenden Ansprüche, **dadurch gekennzeichnet, dass** die mindestens eine Klarlackierung eine Trockenfilmschichtdicke von 25 bis 50 µm, bevorzugt von 25 bis 45 µm aufweist.

10. Mehrschicht-Beschichtung nach einem der vorhergehenden Ansprüche, **dadurch gekennzeichnet, dass** sie genau eine Basislackierung mit einer Trockenfilmschichtdicke von 10 bis 25 µm und genau eine Klarlackierung mit einer Trockenfilmschichtdicke von 25 bis 70 µm aufweist.

11. Melaminharz-haltiger Basislack zur Herstellung einer Mehrschicht-Beschichtung, **dadurch gekennzeichnet, dass**
(i) alle im Basislack enthaltenen Aminoplastharze vollständig methylolierte, vollständig veretherte Melaminharze, bei denen mindestens 90% der veretherten Methylolgruppen mit Butanol verethert sind, sind und
(ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

12. Verfahren zur Herstellung einer Mehrschicht-Beschichtung, umfassend die Schritte
(a) Beschichten eines Substrats mit einer Mehrschicht-Lackierung,umfassend
(A1) mindestens eine Basislackierung aus einem Basislack enthaltend mindestens ein Melaminharz, und
(A2) mindestens eine Klarlackierung als oberste Schicht der Mehrschicht-Lackierung,
(b) Aushärten der Mehrschicht-Lackierung, und
(c) Aufbringen einer Klebstoffschicht aus einem feuchtigkeitshärtenden, isocyanat-basierten Klebstoff unmittelbar auf die oberste Klarlackschicht der Mehrschicht-Lackierung,
**dadurch gekennzeichnet, dass**
(i) alle im Basislack enthaltenen Aminoplastharze vollständig methylolierte, vollständig veretherte Melaminharze, bei denen mindestens 90% der veretherten Methylolgruppen mit Butanol verethert sind, sind und
(ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

13. Verwendung einer Mehrschicht-Beschichtung zur Verklebung von Glasscheiben auf einem mit der Mehrschicht-Beschichtung beschichteten Substrat, umfassend die Schritte
(a) Beschichten des Substrats mit einer Mehrschicht-Lackierung, umfassend
(A1) mindestens eine Basislackierung aus einem Basislack enthaltend mindestens ein Melaminharz, und
(A2) mindestens eine Klarlackierung als oberste Schicht der Mehrschicht-Lackierung,
(b) Aushärten der Mehrschicht-Lackierung,
(c) Aufbringen einer Klebstoffschicht aus einem feuchtigkeitshärtenden, isocyanat-basierten Klebstoff unmittelbar auf die oberste Klarlackschicht der Mehrschicht-Lackierung, und
(d) Aufbringen einer Glasscheibe auf die Klebstoffschicht und Aushärtung des Klebstoffs,
**dadurch gekennzeichnet, dass**
entweder (i) alle im Basislack enthaltenen Aminoplastharze vollständig methylolierte, vollständig veretherte Melaminharze, bei denen mindestens 90% der veretherten Methylolgruppen mit Butanol verethert sind, sind,
oder (ii) der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält,
oder (iii) alle im Basislack enthaltenen Aminoplastharze vollständig methylolierte, vollständig veretherte Melaminharze, bei denen mindestens 90% der veretherten Methylolgruppen mit Butanol verethert sind, sind und der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

14. Verwendung nach Anspruch 13, **dadurch gekennzeichnet, dass** (iii) alle im Basislack enthaltenen Aminoplastharze vollständig methylolierte, vollständig veretherte Melaminharze, bei denen mindestens 90% der veretherten Methylolgruppen mit Butanol verethert sind, sind und der Basislack mindestens 1,0 Gew.-%, bezogen auf das Gesamtgewicht des Basislacks, mindestens eines Polyester-Bindemittels mit einer Hydroxylzahl von mindestens 240 mg KOH/g und einer Säurezahl von höchstens 10 mg KOH/g enthält.

15. Verwendung nach einem der Ansprüche 14 oder 15, **dadurch gekennzeichnet, dass** das Substrat ein Teil einer Automobilkarosserie ist.

## Claims

1. Multilayer coating comprising
(A) a multicoat paint system comprising
(A1) at least one basecoat of a basecoat material comprising at least one melamine resin, and
(A2) at least one clearcoat as the topmost coat of the multicoat paint system, and
(B) an adhesive layer of a moisture-curing, isocyanate-based adhesive directly atop the topmost clearcoat layer of the multicoat paint system,
**characterized in that**
(i) all amino resins present in the basecoat material are fully methylolated, fully etherified melamine resins in which at least 90% of the etherified methylol groups are etherified with butanol, and
(ii) the basecoat material contains at least 1.0% by weight, based on the total weight of the basecoat material, of at least one polyester binder having a hydroxyl number of at least 240 mg KOH/g and an acid number of not more than 10 mg KOH/g.

2. Multilayer coating according to Claim 1, **characterized in that** all of the amino resins present in the basecoat material have a fraction of butanol-etherified methylol groups of at least 95%, based on all of the etherified methylol groups.

3. Multilayer coating according to either of the preceding claims, **characterized in that** the basecoat material contains 8% to 15% by weight, based on the total weight of the basecoat material, of said at least one melamine resin.

4. Multilayer coating according to any of the preceding claims, **characterized in that** the basecoat material contains 1% to 6% by weight, based on the total weight of the basecoat material, of said at least one polyester binder.

5. Multilayer coating according to any of the preceding claims, **characterized in that** said at least one polyester binder has a hydroxyl number of 270 mg KOH/g to 300 mg KOH/g and an acid number of not more than 10 mg KOH/g.

6. Multilayer coating according to any of the preceding claims, **characterized in that** said at least one polyester binder comprises structural units which originate from aliphatic, cycloaliphatic and/or aromatic dicarboxylic and/or polycarboxylic acids and from diols and/or polyols.

7. Multilayer coating according to any of the preceding claims, **characterized in that** said at least one polyester binder has a weight-average molecular weight of 400 to 2500 g/mol.

8. Multilayer coating according to any of the preceding claims, **characterized in that** said at least one basecoat has a dry film thickness of 10 to 25 µm, preferably of 15 to 25 µm.

9. Multilayer coating according to any of the preceding claims, **characterized in that** said at least one clearcoat has a dry film thickness of 25 to 50 µm, preferably of 25 to 45 µm.

10. Multilayer coating according to any of the preceding claims, **characterized in that** it has precisely one basecoat having a dry film thickness of 10 to 25 µm and precisely one clearcoat having a dry film thickness of 25 to 70 µm.

11. Basecoat material comprising melamine resin for producing a multilayer coating, **characterized in that**
(i) all amino resins present in the basecoat material are fully methylolated, fully etherified melamine resins in which at least 90% of the etherified methylol groups are etherified with butanol, and
(ii) the basecoat material contains at least 1.0% by weight, based on the total weight of the basecoat material, of at least one polyester binder having a hydroxyl number of at least 240 mg KOH/g and an acid number of not more than 10 mg KOH/g.

12. Method of producing a multilayer coating, comprising the steps of
(a) coating a substrate with a multicoat paint system comprising
(A1) at least one basecoat of a basecoat material comprising at least one melamine resin, and
(A2) at least one clearcoat as the topmost coat of the multicoat paint system,
(b) curing the multicoat paint system, and
(c) applying an adhesive layer of a moisture-curing, isocyanate-based adhesive directly atop the topmost clearcoat layer of the multicoat paint system,
**characterized in that**
(i) all amino resins present in the basecoat material are fully methylolated, fully etherified melamine resins in which at least 90% of the etherified methylol groups are etherified with butanol, and
(ii) the basecoat material contains at least 1.0% by weight, based on the total weight of the basecoat material, of at least one polyester binder having a hydroxyl number of at least 240 mg KOH/g and an acid number of not more than 10 mg KOH/g.

13. Use of a multilayer coating for adhesively bonding glass sheets to a substrate coated with the multilayer coating, comprising the steps of
(a) coating the substrate with a multicoat paint system comprising
(A1) at least one basecoat of a basecoat material comprising at least one melamine resin, and
(A2) at least one clearcoat as the topmost coat of the multicoat paint system,
(b) curing the multicoat paint system, and
(c) applying an adhesive layer of a moisture-curing, isocyanate-based adhesive directly atop the topmost clearcoat layer of the multicoat paint system, and
(d) applying a glass sheet to the adhesive layer and curing the adhesive,
**characterized in that**
alternatively (i) all amino resins present in the basecoat material are fully methylolated, fully etherified melamine resins in which at least 90% of the etherified methylol groups are etherified with butanol, or (ii) the basecoat material contains at least 1.0% by weight, based on the total weight of the basecoat material, of at least one polyester binder having a hydroxyl number of at least 240 mg KOH/g and an acid number of not more than 10 mg KOH/g,
or (iii) all of the amino resins present in the basecoat material are fully methylolated, fully etherified melamine resins in which at least 90% of the etherified methylol groups are etherified with butanol, and the basecoat material contains at least 1.0% by weight, based on the total weight of basecoat material, of at least one polyester binder having a hydroxyl number of at least 240 mg KOH/g and an acid number of not more than 10 mg KOH/g.

14. Use according to Claim 13, **characterized in that** (iii) all of the amino resins present in the basecoat material are fully methylolated, fully etherified melamine resins in which at least 90% of the etherified methylol groups are etherified with butanol, and the basecoat material contains at least 1.0% by weight, based on the total weight of basecoat material, of at least one polyester binder having a hydroxyl number of at least 240 mg KOH/g and an acid number of not more than 10 mg KOH/g.

15. Use according to either of Claims 14 and 15, **characterized in that** the substrate is part of an automobile body.

## Revendications

1. Revêtement multicouche, comprenant :
(A) un vernissage multicouche, comprenant :
(A1) au moins un vernissage de base constitué par un vernis de base contenant au moins une résine mélamine, et
(A2) au moins un vernissage transparent en tant que couche supérieure du vernissage multicouche, et
(B) une couche adhésive constituée par un adhésif à base d'isocyanate durcissant à l'humidité, directement sur la couche de vernis transparent supérieure du vernissage multicouche,
**caractérisé en ce que**
(i) toutes les résines aminoplastes contenues dans le vernis de base sont des résines mélamine entièrement méthylolées, entièrement éthérifiées, dans lesquelles au moins 90 % des groupes méthylol éthérifiés sont éthérifiés avec du butanol, et
(ii) le vernis de base contient au moins 1,0 % en poids, par rapport au poids total du vernis de base, d'au moins un liant polyester ayant un indice hydroxyle d'au moins 240 mg KOH/g et un indice d'acidité d'au plus 10 mg KOH/g.

2. Revêtement multicouche selon la revendication 1, **caractérisé en ce que** toutes les résines aminoplastes contenues dans le vernis de base présentent une proportion de groupes méthylol éthérifiés avec du butanol d'au moins 95 %, par rapport à tous les groupes méthylol éthérifiés.

3. Revêtement multicouche selon l'une quelconque des revendications précédentes, **caractérisé en ce que** le vernis de base contient 8 à 15 % en poids, par rapport au poids total du vernis de base, de ladite au moins une résine mélamine.

4. Revêtement multicouche selon l'une quelconque des revendications précédentes, **caractérisé en ce que** le vernis de base contient 1 à 6 % en poids, par rapport au poids total du vernis de base, dudit au moins un liant polyester.

5. Revêtement multicouche selon l'une quelconque des revendications précédentes, **caractérisé en ce que** ledit au moins un liant polyester présente un indice hydroxyle de 270 mg KOH/g à 300 mg KOH/g, et un indice d'acidité d'au plus 10 mg KOH/g.

6. Revêtement multicouche selon l'une quelconque des revendications précédentes, **caractérisé en ce que** ledit au moins un liant polyester contient des unités structurales qui proviennent d'acides di- ou polycarboxyliques aliphatiques, cycloaliphatiques et/ou aromatiques et de di- ou polyols.

7. Revêtement multicouche selon l'une quelconque des revendications précédentes, **caractérisé en ce que** ledit au moins un liant polyester présente un poids moléculaire moyen en poids de 400 à 2 500 g/mol.

8. Revêtement multicouche selon l'une quelconque des revendications précédentes, **caractérisé en ce que** ledit au moins un vernissage de base présente une épaisseur de couche de film sec de 10 à 25 µm, de préférence de 15 à 25 µm.

9. Revêtement multicouche selon l'une quelconque des revendications précédentes, **caractérisé en ce que** ledit au moins un vernissage transparent présente une épaisseur de couche de film sec de 25 à 50 µm, de préférence de 25 à 45 µm.

10. Revêtement multicouche selon l'une quelconque des revendications précédentes, **caractérisé en ce qu'**il comprend exactement un vernissage de base d'une épaisseur de couche de film sec de 10 à 25 µm, et exactement un vernissage transparent d'une épaisseur de couche de film sec de 25 à 70 µm.

11. Vernis de base contenant une résine mélamine pour la fabrication d'un revêtement multicouche, **caractérisé en ce que**
(i) toutes les résines aminoplastes contenues dans le vernis de base sont des résines mélamine entièrement méthylolées, entièrement éthérifiées, dans lesquelles au moins 90 % des groupes méthylol éthérifiés sont éthérifiés avec du butanol, et
(ii) le vernis de base contient au moins 1,0 % en poids, par rapport au poids total du vernis de base, d'au moins un liant polyester ayant un indice hydroxyle d'au moins 240 mg KOH/g, et un indice d'acidité d'au plus 10 mg KOH/g.

12. Procédé de fabrication d'un revêtement multicouche, comprenant les étapes suivantes :
(a) le revêtement d'un substrat avec un vernissage multicouche, comprenant :
(A1) au moins un vernissage de base constitué par un vernis de base contenant au moins une résine mélamine, et
(A2) au moins un vernissage transparent en tant que couche supérieure du vernissage multicouche,
(b) le durcissement du vernissage multicouche, et
(c) l'application d'une couche adhésive constituée par un adhésif à base d'isocyanate durcissant à l'humidité, directement sur la couche de vernis transparent supérieure du vernissage multicouche,
**caractérisé en ce que**
(i) toutes les résines aminoplastes contenues dans le vernis de base sont des résines mélamine entièrement méthylolées, entièrement éthérifiées, dans lesquelles au moins 90 % des groupes méthylol éthérifiés sont éthérifiés avec du butanol, et
(ii) le vernis de base contient au moins 1,0 % en poids, par rapport au poids total du vernis de base, d'au moins un liant polyester ayant un indice hydroxyle d'au moins 240 mg KOH/g et un indice d'acidité d'au plus 10 mg KOH/g.

13. Utilisation d'un revêtement multicouche pour le collage de plaques de verre sur un substrat revêtu avec le revêtement multicouche, comprenant les étapes suivantes :
(a) le revêtement du substrat avec un vernissage multicouche, comprenant :
(A1) au moins un vernissage de base constitué par un vernis de base contenant au moins une résine mélamine, et
(A2) au moins un vernissage transparent en tant que couche supérieure du vernissage multicouche,
(b) le durcissement du vernissage multicouche,
(c) l'application d'une couche adhésive constituée par un adhésif à base d'isocyanate durcissant à l'humidité, directement sur la couche de vernis transparent supérieure du vernissage multicouche, et
(d) l'application d'une plaque de verre sur la couche adhésive et le durcissement de l'adhésif,
**caractérisé en ce que**
(i) toutes les résines aminoplastes contenues dans le vernis de base sont des résines mélamine entièrement méthylolées, entièrement éthérifiées, dans lesquelles au moins 90 % des groupes méthylol éthérifiés sont éthérifiés avec du butanol, ou
(ii) le vernis de base contient au moins 1,0 % en poids, par rapport au poids total du vernis de base, d'au moins un liant polyester ayant un indice hydroxyle d'au moins 240 mg KOH/g et un indice d'acidité d'au plus 10 mg KOH/g, ou
(iii) toutes les résines aminoplastes contenues dans le vernis de base sont des résines mélamine entièrement méthylolées, entièrement éthérifiées, dans lesquelles au moins 90 % des groupes méthylol éthérifiés sont éthérifiés avec du butanol, et le vernis de base contient au moins 1,0 % en poids, par rapport au poids total du vernis de base, d'au moins un liant polyester ayant un indice hydroxyle d'au moins 240 mg KOH/g et un indice d'acidité d'au plus 10 mg KOH/g.

14. Utilisation selon la revendication 13, **caractérisée en ce que** (iii) toutes les résines aminoplastes contenues dans le vernis de base sont des résines mélamine entièrement méthylolées, entièrement éthérifiées, dans lesquelles au moins 90 % des groupes méthylol éthérifiés sont éthérifiés avec du butanol, et le vernis de base contient au moins 1,0 % en poids, par rapport au poids total du vernis de base, d'au moins un liant polyester ayant un indice hydroxyle d'au moins 240 mg KOH/g et un indice d'acidité d'au plus 10 mg KOH/g.

15. Utilisation selon l'une quelconque des revendications 14 ou 15, **caractérisée en ce que** le substrat est une pièce d'une carrosserie automobile.
